(19) **Europäisches Patentamt European Patent Office Office européen des brevets**

(11) **EP 3 139 557 B1**

(12) **EUROPEAN PATENT SPECIFICATION**

(45) Date of publication and mention
of the grant of the patent:
**23.10.2019 Bulletin 2019/43**

(51) Int Cl.:
***H04L 27/26*** *(2006.01)*

(21) Application number: **15306355.7**

(22) Date of filing: **03.09.2015**

(54) **METHOD AND APPARATUS FOR REDUCING INTERFERENCE BETWEEN OFDM AND UNIVERSAL FILTERED MULTI-CARRIER (UFMC) SIGNALS**

VERFAHREN UND VORRICHTUNG ZUR VERRINGERUNG DER INTERFERENZ ZWISCHEN OFDM- UND UFMC-SIGNALEN

PROCÉDÉ ET APPAREIL POUR RÉDUIRE LES INTERFÉRENCES ENTRE DES SIGNAUX OFDM ET DES SIGNAUX FILTRÉS UNIVERSELS À PORTEUSES MULTIPLES (UFMC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2017 Bulletin 2017/10**

(73) Proprietor: **Alcatel Lucent
91620 Nozay (FR)**

(72) Inventors:
• **Ahmed, Rana
70435 Stuttgart (DE)**
• **Wild, Thorsten
70435 Stuttgart (DE)**
• **Schaich, Frank
70435 Stuttgart (DE)**

(74) Representative: **Novagraaf Technologies
Bâtiment O2
2, rue Sarah Bernhardt
CS90017
92665 Asnières-sur-Seine Cedex (FR)**

(56) References cited:
• **SCHAICH FRANK ET AL: "Relaxed synchronization support of universal filtered multi-carrier including autonomous timing advance", 2014 11TH INTERNATIONAL SYMPOSIUM ON WIRELESS COMMUNICATIONS SYSTEMS (ISWCS), IEEE, 26 August 2014 (2014-08-26), pages 203-208, XP032666567, DOI: 10.1109/ISWCS.2014.6933347 [retrieved on 2014-10-21]**
• **WUNDER GERHARD ET AL: "5GNOW: non-orthogonal, asynchronous waveforms for future mobile applications", IEEE COMMUNICATIONS MAGAZINE, IEEE SERVICE CENTER, PISCATAWAY, US, vol. 52, no. 2, 1 February 2014 (2014-02-01), pages 97-105, XP011539680, ISSN: 0163-6804, DOI: 10.1109/MCOM.2014.6736749 [retrieved on 2014-02-10]**
• **FRANK SCHAICH ET AL: "Waveform Contenders for 5G - Suitability for Short Packet and Low Latency Transmissions", 2014 IEEE 79TH VEHICULAR TECHNOLOGY CONFERENCE (VTC SPRING), 1 May 2014 (2014-05-01), pages 1-5, XP055173006, DOI: 10.1109/VTCSpring.2014.7023145 ISBN: 978-1-47-994482-8**

EP 3 139 557 B1

**Description**

Embodiments of the present disclosure generally relate to communication systems and, more particularly, to communication systems employing multicarrier signals.

Background

Every few years, wireless cellular communications got renewed. While the move to 2nd Generation (2G) has been technology driven, i.e., the switch to digital signal processing, the switch to 3G (data, internet access) and 4G (video) have been service driven to a high extend. The achievable data rates have grown significantly starting from few kbit/s (beginnings of the Global System for Mobile Communications, GSM) up to a few hundreds of kbit/s (Enhanced Data rates for GSM Evolution, EDGE) for 2G. The beginnings of 3G have reached several hundreds of kbit/s increasing up to 42 Mbit/s (at least theoretically) with High-Speed Downlink Packet Access (HSDPA) the newest incarnation of 3G. 4G (Long-Term Evolution, LTE) achieves up to a few hundreds of Mbit/s using multicarrier techniques, with its evolution LTE advanced at the horizon approaching the Gbit/s region.

Multicarrier signal formats offer a large amount of flexibility. This flexibility is very attractive when aiming at a scalable radio frame structure. There is also a natural, physical explanation why multicarrier signal formats are desirable. Wireless propagation channels are linear and - approximately over the duration of one multicarrier symbol - time-invariant (LTI). LTI systems preserve sinusoids as eigenfunctions. Sinusoids are one basic building block of multicarrier modulated signals. This leads to nice properties when it comes to demodulation and equalization.

One significant drawback of multicarrier modulation is the Peak-to-Average Power Ratio (PAPR), but there are methods like Discrete Fourier Transform (DFT) precoding used in conjunction with Orthogonal Frequency Division Multiplexing (OFDM) to build up Single-Carrier Frequency Division Multiplexing (SC-FDMA), out of multicarrier signals, which brings down PAPR.

OFDM is today's dominant multicarrier technology. Its Cyclic Prefix (CP) allows transforming the linear convolution of the channel into a cyclic convolution, thus deals very elegantly with multi-path propagation, at the price of additional overhead of the CP, typically ranging from 5-25%. As long OFDM is used in a fully time- and frequency synchronous manner this is very attractive.

5G systems will bring along new device classes and new traffic types, e.g., driven from the Internet of Things (IoT). Relaxing synchronicity will allow for reducing a painful overhead for massive numbers of machines. Technologies like Autonomous Timing Advance (ATA) can be used. ATA here means an open-loop timing control approach, where a mobile terminal synchronizes itself on a downlink receive signal, e.g. using pilot symbols and/or synchronization sequences and corrects its timing autonomously, e.g. based on knowledge of supported cell sizes, etc. Additionally, low-end devices can be made cheaper when e.g. oscillator requirements can be relaxed, which are very strict for e.g. LTE. On top, the trend towards higher carrier frequencies, like millimeter waves, causes that the same relative Carrier Frequency Oscillator (CFO) requirements will lead to much larger absolute frequency shifts, phase jitters etc. observed in the baseband processing.

The demand for increased robustness and for relaxation of strict time- and frequency alignments does not go together well with OFDM. In the OFDMA uplink, when devices allocated to neighboring frequencies have timing- and frequency offsets, orthogonality is lost and Inter-Carrier Interference (ICI) is generated, reducing the overall system performance. Due to the rectangular-windowed time domain shape of OFDM symbols, the subcarrier spectrum is formed of sine-functions which have comparatively high side lobe levels. Only with strict time- and frequency alignments, OFDM can be attractive when the nulls of the spectral subcarrier levels fall together with the maxima of other subcarriers.

Existing multicarrier alternatives to OFDM aim at reduced spectral side-lobe levels, making them more attractive for e.g. uplink FDMA with asynchronous users and operation in fragmented spectrum. Filter-Bank based Multi-Carrier (FBMC) is using additional persubcarrier pulse-shaping filters, typically with a length of more than one multi-carrier symbol. In an FBMC system a time continuous data symbol of subcarrier $k$ may be expressed as

$$s_k(t) = \sum_n s_k[n]\delta(t - nT), \qquad (1)$$

where $s_k[n]$ are discrete subcarrier data symbols, $k$ is a subcarrier index, and $T$ is a symbol time spacing. The difference between OFDM and FBMC lies in the choice of $T$ and transmitter and receiver prototype filters $p_T(t)$ and $p_R(t)$, respectively (see below). In a conventional OFDM, $p_T(t)$ is a rectangular pulse of height one and width $T$. The receiver prototype filter $p_R(t)$ is also a rectangular pulse of height one, but its width is reduced to $T_{FFT} < T,$ where $T_{FFT} = 1/B,$ and $B$ is the frequency spacing between subcarriers. In the presence of a channel, each transmitted tone will undergo a transient before reaching a steady state. To accommodate the transient period, the duration of $p_T(t)$ is extended by an interval greater than the duration of the channel impulse response, and at the receiver, $p_R(t)$ is time aligned with the transmitted tone after it has reached steady state. In OFDM the duration of $p_T(t)$ is extended by the process of adding a cyclic prefix (CP) to each OFDM symbol.

In FBMC systems that may be designed for maximum bandwidth efficiency, $T = T_{FFT} = 1/B$, however, the durations of $p_T(t)$ and $p_R(t)$ are greater than $T$ (usually, an integer multiple of $T$). Hence, in FBMC, successive data symbols overlap; no cyclic prefix is required. To sumarize, in FBMC, a set of parallel data symbols $s_k[n]$ are transmitted through a bank of modulated filters, and, thus, a transmit signal $x(t)$ may be synthesized according to

$$x(t) = \sum_n \sum_{k \in \mathcal{K}} s_k[n] \, p_T(t - nT) e^{j2\pi(t - nT)f_k},$$

$$(2)$$

The difference between OFDM and FBMC lies in the choice of the prototype filters $p_T(t)$ and $p_R(t)$.

The FBMC filters provide very strong side-lobe suppression and can be implemented efficiently in poly-phase filter-banks. The CP overhead can be avoided. Due to the long filter lengths, FBMC is best used in conjunction with Offset-QAM (OQAM) with subsequent symbols overlapping, but being orthogonalized by using real and imaginary part of the symbol alternately. Drawbacks of FBMC are that - due to OQAM - it is e.g. not compatible to all kinds of Multiple Input Multiple Output (MIMO). Furthermore, the long filter lengths make short burst inefficient, due to filter "ramp up" and "ramp down" time. Short bursts will be important for energy-efficient MTC.

Universal Filtered Multi-Carrier (UFMC) - also known as universal filtered OFDM (UF-OFDM) - is a recently introduced technique generalizing filtered OFDM, where the filtering is done over the entire frequency band, and FBMC (Staggered Multi-Tone, SMT), where the filtering is done on a subcarrier level. One of the design criteria of UFMC is to collect the advantages of filtered OFDM and FBMC while avoiding the respective disadvantages, thereby trading off the filtering functionality between the two techniques. Typically, UFMC filtering is performed per sub-band comprising multiple subcarriers, for example, per Physical Resource Block (PRB), which suppresses the spectral side-lobe levels and thus the ICI between different resource blocks stemming from, say, lack of synchronism or Carrier Frequency Offsets (CFOs). Another advantageous effect of filtering per sub-band instead of per subcarrier is that the filter length may be significantly shorter than that of FBMC due to the larger sub-band bandwidth (e.g., in the order of the OFDM cyclic prefix). Hence, the UFMC waveform is also an appealing technique for communication with short bursts, as in MTC. Additionally, Quadrature Amplitude Modulation (QAM) may be efficiently used instead of offset QAM, compulsively adopted by FBMC. UFMC is for example described by Schaich Frank et al.: "Relaxed synchronization support of universal filtered multi-carrier including autonomous timing advance", 11th international symposium on wireless communications systems, 2014, Wunder Gerhard et al.;"5GNOW: non-orthogonal, asynchronous waveforms for future mobile applications" IEEE communications magazine, vol. 52, no. 2, 2014, or Schaich Frank et al.:"Waveform contenders for 5G - Suitability for short packet and low latency transmissions", IEEE 79th vehicular technology conference, 2014.

In case of deployment of UFMC for 5G communications, legacy devices using CP-OFDM will suffer from ICI since subcarriers from the two different waveforms are not orthogonal. Hence, it is desirable to provide concepts for interference reduction.

Summary

According to a first aspect of the present disclosure, embodiments provide a method for reducing interference between a OFDM signal and a UFMC signal. The UFMC signal comprises a first frequency block or sub-band and at least a second frequency block or sub-band. The first frequency block (sub-band) comprises a first group of subcarriers. The first frequency sub-band is filtered with a first frequency sub-band specific sideband suppression filter for sideband suppression outside of said first frequency sub-band. The second frequency block (sub-band) of the UFMC signal comprises a second group of subcarriers. The second frequency sub-band is filtered with a second frequency sub-band specific side-band suppression filter for sideband suppression outside of said second frequency sub-band. The method includes providing, e.g., transmitting or receiving, the OFDM signal and the UFMC signal with a relative delay to each other.

Embodiments of the present disclosure may be useful in situations where there is non-negligible crosstalk between the OFDM signal and the UFMC signal. This may, for example, be the case when both multicarrier signals are applied in the same frequency band, for example by using the same RF carrier frequency, but using disjoint sub-bands for respective subcarriers. Other interference scenarios leading to substantial cross-talk between the two waveforms are possible as well. Embodiments of the present disclosure may reduce the interference without sacrificing spectral efficiency and with no additional significant cost. An underlying idea is to transmit the UFMC signal with a relative delay compared to the OFDM signal.

In some embodiments, the method comprises obtaining the UFMC signal, obtaining the OFDM signal, and forwarding (e.g., transmitting) the OFDM signal and the UFMC signal with a relative delay to each other. Here, the expression "obtaining" may include generating or receiving the respective signal, for example.

In some embodiments, the UFMC signal and the OFDM signal may be obtained at or provided by the same transceiver apparatus, which may be a base station or a mobile terminal. In other embodiments, the UFMC signal and the OFDM signal may be obtained at or provided by different transceiver apparatuses, respectively.

In some embodiments, there may be a predetermined timing relationship between the two different waveforms, for example due to synchronization between the UFMC signal and the OFDM signal. In such cases the relative delay may be a predetermined relative delay.

In some embodiments, there may be a fixed timing relationship between the two different waveforms, for example due to synchronization between the UFMC signal and the OFDM signal. In such cases the relative delay may be a fixed relative delay.

In some embodiments, at least the OFDM signal uses a cyclic prefix. Transmitting the OFDM signal and the UFMC signal with the relative delay may be performed to cause a relative delay between a transmitted symbol (e.g. a multicarrier symbol) of the UFMC signal and a transmitted symbol (e.g. a multicarrier symbol) of the OFDM signal smaller than a duration of the OFDM signal's cyclic prefix.

In some embodiments, also the UFMC signal may use a cyclic prefix. This UFMC cyclic prefix may be used in addition to the frequency sub-band specific sideband suppression filters and may be shorter than the OFDM signal's cyclic prefix.

In some embodiments, the relative delay between the transmitted symbol of the UFMC signal and the transmitted symbol of the OFDM signal substantially corresponds to half of the duration of the cyclic prefix. Here, the expression "substantially" indicates that the relative delay need not be exactly half of the duration of the cyclic prefix. Embodiments also cover a relative delay in the range of 0.4 - 0.6 of the duration of the cyclic prefix, for example.

In some embodiments, a filter order/length of the first and/or the second frequency sub-band specific sideband suppression filter corresponds to the duration of the cyclic prefix. This means that the temporal extension of the impulse response of the first and/or the second frequency sub-band specific sideband suppression filter corresponds to the duration of the cyclic prefix. For example, the sub-bands of the UFMC signal may be shaped by respective Dolph-Chebyshev Finite Impulse Response (FIR) filters.

In some embodiments, the OFDM signal uses one or more frequency sub-bands spectrally adjacent to the first and/or the second first frequency sub-band of the UFMC signal. In such cases there may be significant interference between the OFDM sub-bands the adjacent UFMC sub-bands.

In some embodiments, a spacing of physical radio resources used by the UFMC and OFDM signal may be equal or at least similar. That is, the method may further include generating OFDM symbols of the OFDM signal with a predefined OFDM symbol rate and generating multicarrier symbols of the UFMC signal with a multicarrier symbol rate equal to the predefined OFDM symbol rate. Also, the method may further include converting a frequency domain version of the OFDM signal to a time domain version using an inverse discrete Fourier transform of a predefined length, where the predefined length corresponds to a maximum number of subcarriers of the OFDM signal, and converting a frequency domain version of the UFMC signal to a time domain version using an inverse discrete Fourier transform of said predefined length.

In some embodiments, the different waveforms, i.e., the OFDM signal and the UFMC signal, may be associated with different carrier signals and/or with different radio access systems, respectively. Hence, the transmitting may comprise transmitting the OFDM signal using a first Radio Frequency (RF) carrier signal and transmitting the UFMC signal using a second RF carrier signal.

In some embodiments, the different waveforms, i.e., the OFDM signal and the UFMC signal, may be modulated on the RF carrier signals with the same RF carrier frequency, respectively. In such embodiments, the OFDM signal and the UFMC signal may use disjoint sub-bands within the same system bandwidth, however.

According to yet a further aspect, embodiments provide an apparatus or a system for reducing interference between an OFDM signal and a UFMC signal. The UFMC signal comprises a first frequency sub-band and at least a second frequency sub-band. The first frequency sub-band comprises a first group of subcarriers, the first frequency sub-band being filtered with a first frequency sub-band specific sideband suppression filter for sideband suppression outside of said first frequency sub-band. The second frequency sub-band comprises a second group of subcarriers, the second frequency sub-band being filtered with a second frequency sub-band specific sideband suppression filter for sideband suppression outside of said second frequency sub-band. The apparatus comprises a transmitter configured to transmit the OFDM signal and the UFMC signal with a relative delay to each other. Thereby the transmitter may be understood as digital and analog electrical circuitry which, with the aid of power amplifiers and one or more antennas, produces radio waves carrying the OFDM and UFMC signals, respectively.

In some embodiments, the apparatus/system may comprise a UFMC signal module configured to obtain (e.g., to generate) the UFMC signal, a OFDM signal module configured to obtain (e.g., to generate) the OFDM signal, and a transmitter configured to transmit the OFDM signal and/or the UFMC signal with a relative delay to the respective other signal.

In some embodiments, the apparatus/system may be implemented in or coupled to a base station of a cellular communications system, for example. The base station may be configured to transmit and receive both, OFDM signals and UFMC signals, for example. In other embodiments, the apparatus or system for reducing interference may also comprise more than one transceiver. For example, a system for reducing interference may comprise a base station for the UFMC signal and another (adjacent) base station for the OFDM signal.

Some embodiments comprise digital circuitry installed within the apparatus for reducing interference. Such a digital control circuitry, e.g., a digital signal processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the method, when the computer program is executed on a programmable hardware device.

Embodiments allow for a better co-existance of the two waveforms of LTE using legacy OFDM and proposed 5G systems using and UFMC, which is also referred to as Universal Filtered Orthogonal Frequency Division Multiplexing (UF-OFDM) in some publications. Embodiments do not require sacrificing spectral efficiency.

Brief description of the Figures

Some embodiments of apparatuses and/or methods will be described in the following by way of example only, and with reference to the accompanying figures, in which

Fig. 1a     illustrates a block diagram of an example UFMC transmitter apparatus according to an embodiment;

Fig. 1b     illustrates the proposed relative delay between coexisting OFDM and UFMC signal;

Fig. 1c     illustrates a flow-chart of an example method according to an embodiment;

Fig. 2      shows comparison of spectra related to a single frequency block for OFDM and UFMC;

Fig. 3a     illustrates an equivalent channel between an OFDM receiver and an OFDM transmitter;

Fig. 3b     illustrates an equivalent channel between a UFMC receiver and a UFMC transmitter;

Fig. 4      illustrates an equivalent channel between an OFDM receiver and a UFMC transmitter

Fig. 5      shows a diagram showing sampling time of synchronized UFMC signal vs delayed UFMC signal;

Fig. 6      shows an impulse response of an example time domain channel filter used for conditioning a UFMC signal;

Fig. 7      illustrates an equivalent channel between an OFDM receiver and a UFMC transmitter with delay $= 0.5L$

Fig. 8      illustrates an equivalent channel between an OFDM receiver and a CP-UFMC signal with delay $= 0.5L$;

Fig, 9      shows a simulated total interference power from all subcarriers with/without raised cosine windowing with $L = 73$;

Fig. 10     shows a simulated total interference power from all subcarriers with/without raised cosine windowing with $L = 36$;

Fig. 11     shows a simulated total interference power from all subcarriers with/without raised cosine windowing with $L = 36$ and CP-UFMC;

Fig. 12     shows a simulated $|H(k, k + d)|^2$ in dB for different combinations of signal/receiver format with/without cosine windowing with $L = 73$;

Fig. 13     shows a simulated $|H(k, k + d)|^2$ in dB for different combinations of signal/receiver format with/without cosine windowing with $L = 36$;

Fig. 14    shows a simulated total interference power from all subcarriers with/without cosine windowing with $L$ = 73 for non-contiguous resource allocation of 3 PRBs;

Fig. 15    shows a simulated total interference power from all subcarriers with/without cosine windowing with $L$ = 36 for non-contiguous resource allocation of 3 PRBs;

Fig. 16    shows a simulated total interference power from all subcarriers with/without cosine windowing with $L$ = 73 for non-contiguous resource allocation of 10 PRBs;

Fig. 17    shows a simulated total interference power from all subcarriers with/without cosine windowing with $L$ = 73 for non-contiguous resource allocation of 20 PRBs;

Fig. 18    shows a simulated total interference power from all subcarriers with/without cosine windowing with $L$ = 36 for non-contiguous resource allocation of 20 PRBs;

Fig. 19    shows a simulated total interference power from all subcarriers with/without cosine windowing with $L$ = 73 for non-contiguous resource allocation of 3 PRBs with 10 guard subcarriers between the two waveforms;

Fig. 20    illustrates an upper bound on mean ICI power per subcarrier FAR=-40dB;

Fig. 21    shows a simulated total interference power from all subcarriers 1 PRB with no pre-equalization $L$ = 36;

Fig. 22    shows a simulated total interference power from all subcarriers 1 PRB with no pre-equalization $L$ = 100;

Fig. 23    illustrates gain obtained from ICI suppression by introducing relative delay on UFMC signal for different $L$ and FAR;

Fig. 24    shows a simulated total interference power from all subcarriers 4 PRBs with no pre-equalization $L$ = 36;

Fig. 25    shows a simulated total interference power from all subcarriers 16 PRBs with no pre-equalization $L$ = 36;

Fig. 26    shows a simulated total interference power from all subcarriers 64 PRBs with no pre-equalization $L$ = 36;

Fig. 27    illustrates ICI power per subcarrier with no guard subcarriers;

Fig. 28    ICI power per subcarrier with guard subcarriers;

Fig. 29    illustrates two contiguous user allocations sharing the same multi-carrier symbol using the two different waveforms: UFMC and legacy CP-OFDM; and

Fig. 30    shows the tame receiver window size for both allocations (zero relative delay).

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

For the air interface of 5G wireless cellular systems the introduction of new waveforms is discussed which have e.g. better spectral localization compared to cyclic prefix (CP)-OFDM, the dominating waveform of present 4G systems. UFMC is waveform technology using sub-band-wise filtering and is a 5G candidate waveform technology. One technical problem is focused on the introduction of 5G waveform technology in the same band in parallel to already existing CP-OFDM. At the beginning of deployment of the new UFMC waveform for 5G communications legacy devices using CP-OFDM may suffer from ICI since subcarriers from the two different waveforms are not orthogonal.

Adding guard subcarriers between the two bands carrying the two waveforms can reduce ICI at the cost of losing spectral efficiency. Applying a more robust Modulation and Coding Schemes (MCS), e.g. low order QAM constellations, at the edge of the two waveforms (where the interference is maximum) can reduce Bit Error Rates (BER) at the cost of losing spectral efficiency.

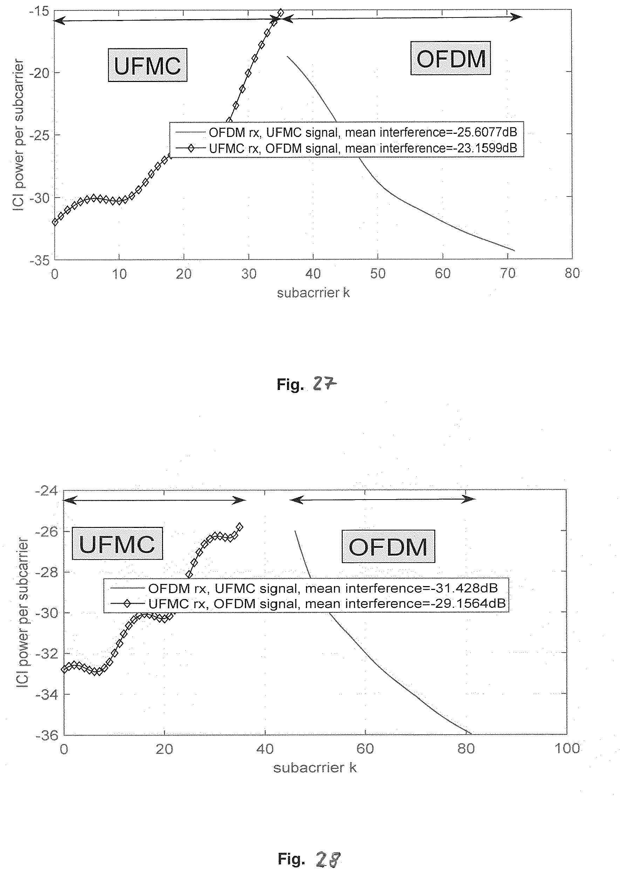

In **Fig. 27** we can see the ICI power per subcarrier assuming two users using the two different waveforms. We assumed three PRBs per user, each with 12 subcarriers, FFT size = 1024, an example Dolph-Chebyshev low pass filter is used at the UFMC transmitter side with filter order $L$=74. As shown the interference is maximum at the edge between the two waveforms and decreases steadily as the distance from the edge increases. In **Fig. 28,** ten guard subcarriers are added between the two allocations. One can observe the reduction in the ICI power in Fig. 28, at the expense of losing spectral efficiency.

Embodiments propose to reduce the interference without sacrificing spectral efficiency and with no additional significant cost. An underlying idea is to transmit the UFMC signal with a relative delay compared to a co-existing legacy OFDM signal.

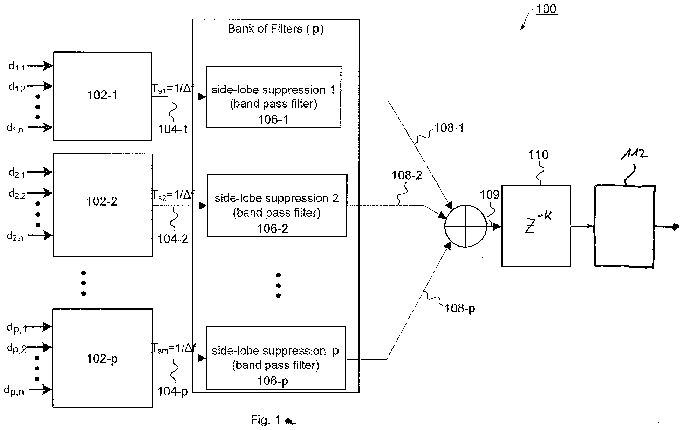

**Fig. 1a** schematically illustrates a block diagram of an example transmitter apparatus 100 for reducing interference between an OFDM signal and a UFMC signal according to an embodiment. Note that in some embodiments the transmitter apparatus 100 may also be configured to additionally generate and transmit conventional OFDM signals, for example.

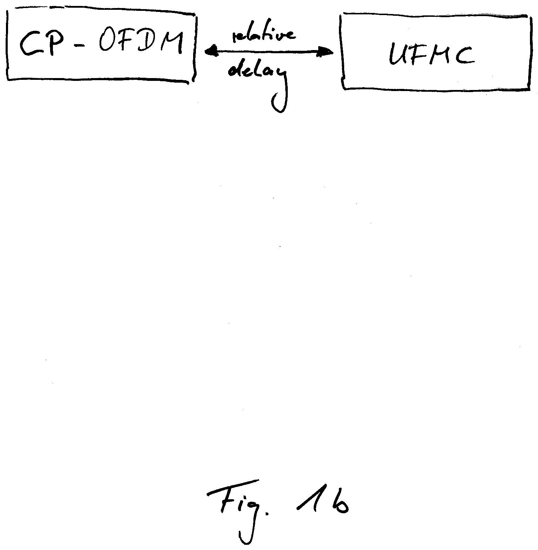

The example UFMC transmitter 100 uses a frequency block-wise IDFT (IDFT = Inverse Discrete Fourier Transformation). Data symbols $d_{i,j}$ ($i$ = 1 ... $p;j$ = 1 ... n) are modulated onto $p$ groups (or frequency blocks) each comprising $n$ subcarriers. Note that the number of subcarriers per frequency block (also referred to as sub-band) may deviate from each other. Each frequency block i is converted from frequency-domain to time-domain by a frequency block specific IDFT module 102-1, 102-2, ..., *102-p* to obtain $p$ time-domain signals 104-1, 104-2, ..., 104-p which are then individually filtered by frequency block specific side-lobe suppression (band pass) filters 106-1, 106-2, ..., 106-p. The filtered time domain signals 108-1, 108-2, ..., 108-*p* are then combined to the UFMC multicarrier signal 109. Transmitter apparatus 100 comprises an analog or digital delay unit 110 which is configured to delay frame or symbol boundaries of the UFMC multicarrier signal 109 by $k$ samples vis-à-vis frame or symbol boundaries of a coexisting legacy OFDM signal, such that the coexisting OFDM signal and the UFMC signal 109 are transmitted with a relative delay to each other, as shown in **Fig. 1b.** For that purpose the delay unit 110 may use a synchronization signal (not shown) indicative of symbol or frame boundaries of the legacy OFDM signal. The relative delay of the UFMC signal may then be adjusted with respect to the symbol or frame boundaries of the legacy OFDM signal. In some embodiments, delay unit 110 may comprise or may be included in one or more digital filter(s).

In some embodiments, the relative delay between the legacy OFDM signal and the UFMC signal 109 is a predetermined or even fixed relative delay. However, the skilled person having benefit from the present disclosure will appreciate that also variable or adaptive relative delays may be useful in some embodiments. Typically, the legacy OFDM signal uses a cyclic prefix (CP OFDM). As will become apparent in the sequel, it may be beneficial to adjust the relative delay between a transmitted symbol of the UFMC signal 109 and a transmitted symbol of the OFDM signal smaller than a duration of the OFDM signal's cyclic prefix. Particularly useful may be relative delays in the range of 0.4 - 0.6 of the duration of the OFDM signal's cyclic prefix, for example.

After having introduced the relative delay corresponding to $k$ samples vis-à-vis a legacy OFDM signal using delay unit 110, the delayed UFMC signal may be converted from baseband to a UFMC Radio Frequency (RF) domain (see reference numeral 112), for example, by mixing the UFMC baseband signal 109 with a UFMC RF carrier signal. Note that the UFMC RF carrier signal will usually be different from a RF carrier signal of the legacy OFDM signal.

Note that the splitting of processing functions across processing units shown in Fig. 1a is not critical, and, as can be understood by those skilled in the art, the number of processing units, the number of processing functions and an allocation of the processing functions to the processing units may vary.

The processing functions of the exemplary transmitter apparatus 100 may be split into a first group of processing units 102-1, 102-2, ..., 102-p and a second group of band pass filters 106-1, 106-2, ..., 106-p. A mathematical description of a transmitted complex-valued time-domain signal vector **X** may be given, for example, by following equation:

$$\mathbf{x} = \sum_{i=1}^{p} \mathbf{F}_i \mathbf{V}_i \mathbf{d}_i \qquad (1)$$

with

$p$: number of frequency blocks (such as a number of LTE PRBs),

$\mathbf{F}_i$: so-called Toeplitz matrix for number i of the frequency blocks, which contains a band-pass FIR filter (FIR = Finite Impulse Response) for filtering the number i of the frequency blocks,

$\mathbf{V}_i$: complex-valued matrix for number i of the frequency blocks for applying an IDFT and for a mapping of the data symbol vector $\mathbf{d}_i$ for example onto sinusoidal subcarriers,

$\mathbf{d}_i$: data symbol vector for number $i$ of the $p$ frequency blocks (sub-bands).

According to Fig. 1a, a first data symbol vector **di** comprising $n_1$ data symbols $d_{i,j}$ ($j$ = 1 ... $n_1$) is applied to a first one 102-1 of a group of IDFT processing units 102-1, 102-2, ..., 102-p for performing a first IDFT on the first symbol vector **di**. The IDFT may include interpolation and up-conversion by choosing respective IDFT vectors appropriately in terms of length and phase rotations. The IDFT processing unit 102-1 generates a first time domain signal 104-1, which contains a plurality of subcarriers forming a first frequency block. The IDFT may have a dimension $of~n_1$ x $N$, with $n_1$ being a number of subcarriers to be modulated for the first frequency block, and $N$ being equal to a total number of subcarriers theoretically fitting for a predefined subcarrier distance into a whole predefined frequency range (band), when the whole predefined frequency range would be occupied by subcarriers. In a same way, the data symbol vectors $\mathbf{d}_2$,..., $\mathbf{d}_p$ may be applied to corresponding further IDFT processing units 102-2, ..., 102-p for performing further IDFTs including interpolation and up-conversion and for generating further time domain signals 104-2, ..., 104-p, which each contain the frequency blocks of subcarriers. The processing units 102-1, 102-2, ..., 102-p enable a separate inverse Fourier transformation for each frequency block, which could be a sub-band or a subset of a sub-band. That is to say, for each frequency block or sub-band, indexed $i$, $n_i$ complex Quadrature Amplitude Modulation (QAM) data symbols $d_{i,j}$ ($i$ = 1 ... $p$;$j$ = 1 ... $n_i$) may be transformed to time-domain using the IDFT-matrix $\mathbf{V}_i$. Thereby $\mathbf{V}_i$ may be of dimension $N$ x $n_i$ and include the relevant columns of the inverse Fourier matrix according to the respective sub-band position within the overall available frequency range.

The first time domain signal 104-1 is provided to a first one 106-1 of the group of band pass filters 106-1, 106-2, ..., 106-p, which generates a first filtered time domain signal 108-1 corresponding to the first frequency or subcarrier block including $n_1$ subcarriers. A bandwidth of the first band pass filter 106-1 may be adapted so that the first band pass filter 106-1 is able to block and attenuate all frequency components outside a frequency range of the first frequency block. In a similar way, the further time domain signals 104-2, ..., $104$-$p$ may be provided to corresponding further band pass filters 106-2, ..., $106$-$p$ for generating the further filtered time domain signals 108-2, ..., 108-$p$. The band pass filters 106-$i$ ($i$ = 1, ..., $p$) may each be represented by a Toeplitz matrix $\mathbf{F}_i$ with dimension ($N$+$N_{\text{filter}}$-1)x$N$, composed of the respective filter impulse response, enabling the convolution.

The filtered time domain signals 108-1, 108-2, ..., 108-$p$ may be delayed relative to a OFDM signal (see reference numeral 110) and then provided to a back end processing unit 112 which may be configured to perform a baseband to RF conversion of the combined and delayed filtered time domain signals 108-2, ..., 108-$p$.

A UFMC transmit signal has a time domain characteristic in that the filters generate multi-carrier symbols with a soft energy ramp-up and ramp-down, according to equation (1). The subsequent multi-carrier symbol again starts with ramp-up and ends with a ramp-down. Hence, a rectangular pulse on each subcarrier of an OFDMA system is replaced by a pulse with soft transitions leading to filters having a shorter length in time domain and consequently a shorter symbol rate. The frequency-block-wise filtering of UFMC brings in additional flexibility and may be used to avoid FBMC drawbacks. The filtering per block of subcarriers (e.g. "physical resource block" or "sub-band" in the LTE terminology) may result in band-pass filters 106-$i$ ($i$ = 1, ..., $p$) which are spectrally broader in pass-band than FBMC and thus shorter in time. This shortened time can be used to bring down the filter length e.g. in the order of the OFDM cyclic prefix (CP). Short bursts may be supported well with that, as well as operation in fragmented bands. Side-lobe suppression now works in between resource (frequency) blocks, instead in between subcarriers. The filter ramp-up and ramp-down in time domain may provide a symbol shape which has inherent soft protection against inter-symbol interference (ISI), as well as robustness for supporting multiple access users which are not perfectly time-aligned, as e.g. with ATA.

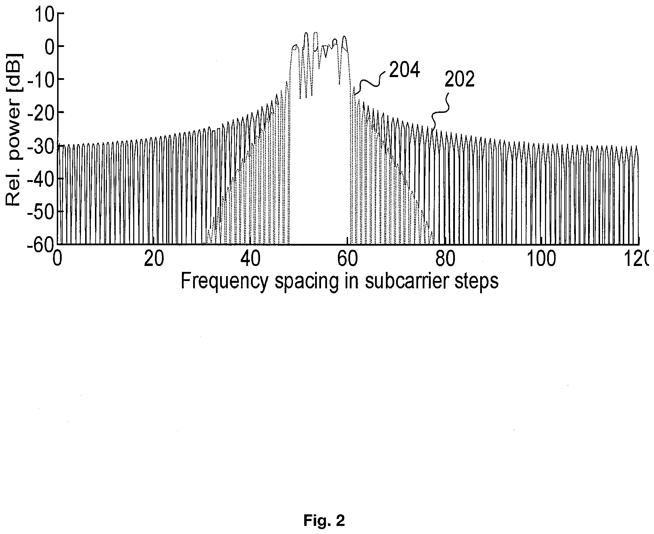

**Fig. 2** illustrates a comparison of the spectrum of a single Physical Resource Block (PRB) or frequency block between OFDM (see reference numeral 202) versus the proposed UFMC signal format (see reference numeral 204). The reduction of the side-lobe levels is apparent.

The skilled person will appreciate that apparatus 100 is configured to perform a method for reducing interference between an OFDM signal and a UFMC signal, wherein the UFMC signal comprises a first frequency block and at least a second frequency block. The first frequency block comprises a first group of subcarriers being filtered with a first frequency block specific sideband suppression filter for sideband suppression outside of said first frequency block. The second frequency block comprises a second group of subcarriers being filtered with a second frequency block specific sideband suppression filter for side-band suppression outside of said second frequency block. The method comprises transmitting the OFDM signal and the UFMC signal with a relative delay to each other.

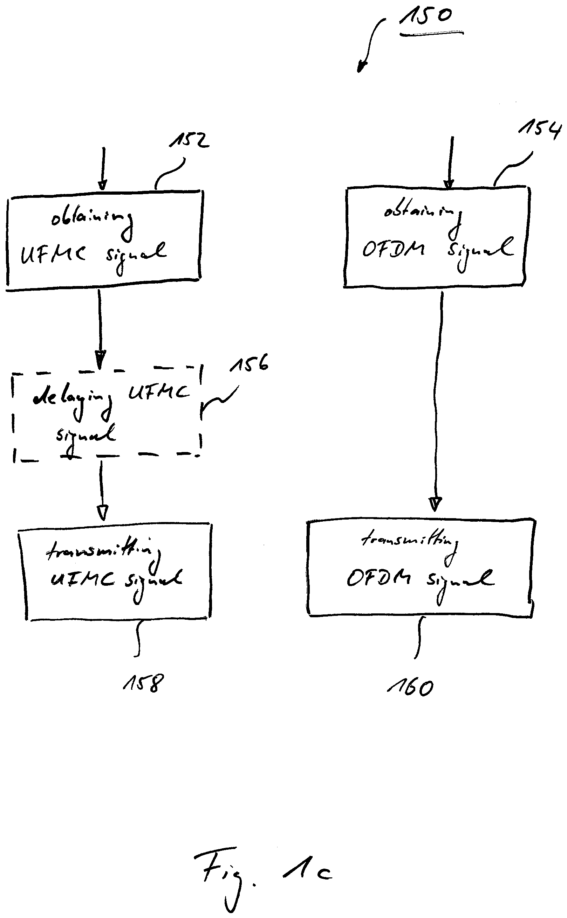

An example embodiment of such a method 150 is shown in **Fig. 1c.**

Method 150 comprises obtaining 152 the UFMC signal and obtaining 154 the OFDM signal. Thereby the obtained UFMC signal and OFDM signal may correspond to the same multicarrier symbol index. In some embodiments, obtaining the respective signal may include generating the respective signal. Alternatively, obtaining the respective signal may include receiving the respective signal, for example. In the example embodiment of Fig. 1c, the UFMC signal is delayed 156 relative to the OFDM signal. Hence, symbol boundaries of UFMC multicarrier symbols may be delayed relative to boundaries of OFDM multicarrier symbols. The skilled person will appreciate that similarly the OFDM signal could be delayed in other embodiments. Method 150 further includes forwarding 160 (e.g. transmitting) the OFDM signal and forwarding 158 (e.g. transmitting) the UFMC signal with a relative delay to each other. Thereby the acts 158 and 160 could be performed at the same transceiver entity (e.g. base station) or at different transceiver entities, depending on the implementation.

In Fig. 1c, reference numerals 152 and 154 could also be understood as respective UFMC/OFDM signal obtaining modules. An example of a UFMC obtaining module using IFFT/FFT signal transforms has already been explained with respect to Fig. 1a. Likewise, reference numeral 156 could be understood as a delay module, similar to delay unit 110. Reference numerals 158 and 160 could also be understood as respective UFMC/OFDM transmitters.

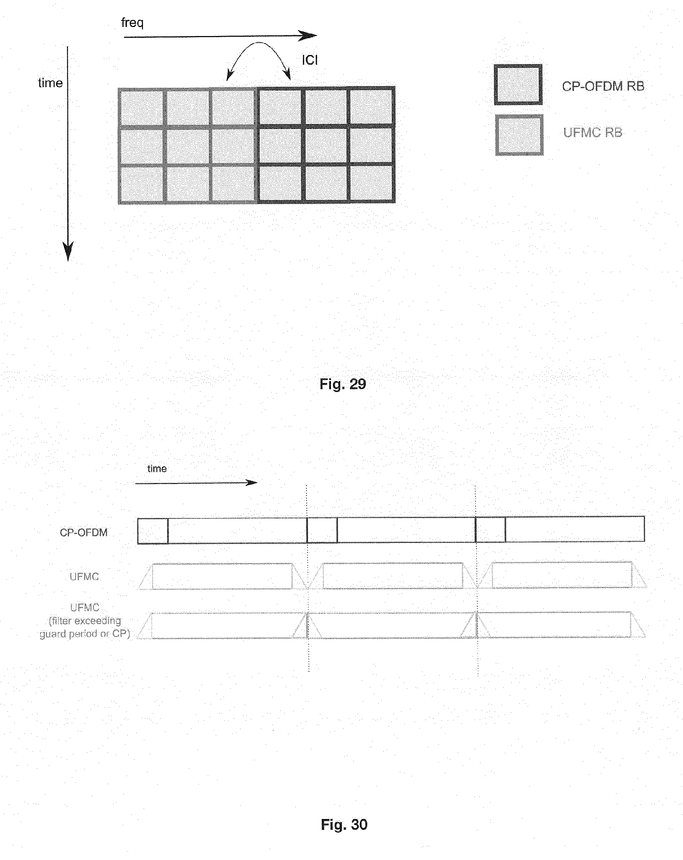

At the beginning of deployment of 5G, both waveforms OFDM and UFMC may co-exist within the same network. Therefore, it is important to assess the cross-talk between the two waveforms especially, for example, when two users using the two heterogeneous waveforms are assigned neighboring or adjacent sub-bands as shown in **Fig. 29.** While an OFDM receiver can ideally provide orthogonal transmission of transmitted QAM symbols from an OFDM transmitter, it is not designed to be orthogonal to an UFMC transmitter, therefore ICI occurs at the OFDM receiver side when it processes a UFMC signal. Similarly, UFMC receiver is not designed to be orthogonal to an OFDM transmitter, and hence ICI occurs at the UFMC receiver side when it processes an OFDM signal. The interference is maximum at the edge between the two allocations, as shown in **Fig. 27.**

In this disclosure derives a general model to study the interference of the UFMC waveform on the legacy Cyclic Prefix OFDM (CP-OFDM) in the frequency domain. Following model assumptions are made:

1. two allocations (using the two waveforms) sharing the same multicarrier symbol in the time domain (i.e. transmitted simultaneously). Therefore:

   a) the same IFFT/FFT size is used in both waveforms (UMFC and CP-OFDM).
   b) both allocations use the same symbol rate (e.g., same receiver window size as shown in **Fig. 30.** That is to say, given that the OFDM symbols of the OFDM signal are generated with a certain OFDM symbol rate, the multicarrier symbols of the UFMC signal may then be generated with a multicarrier symbol rate equal to the OFDM symbol rate.

2. for simplicity reasons only, a flat fading communication channel and no noise case.

The skilled person having benefit from the present disclosure will appreciate that the above assumptions are mainly made for explanatory reasons. Embodiments of the present disclosure, however, are not limited to those example assumptions. The skilled person will appreciate that various benefits may also be obtained when departing from the above example assumptions.

Basically we derive an equivalent end-to-end channel between transmitted QAM symbols $S_y$ and received demodulated unequalized symbols $R_{x-y}$. When the receiver of waveform $x$ $W_x$ is used to receive a signal of waveform $y$ $r^y$, the received demodulated unequalized vector can be written as:

$$
\begin{aligned}
\boldsymbol{R}_{x-y} &= \boldsymbol{W}_x \boldsymbol{r}^y \\
&= \boldsymbol{W}_x \boldsymbol{v}_y \boldsymbol{S}_y \\
&= \boldsymbol{H}_{x-y}^{eq} \boldsymbol{S}_y
\end{aligned}
\tag{2}
$$

where $\boldsymbol{v}_y$ is the modulation matrix of waveform y and the equivalent channel $\boldsymbol{H}^{eq}{}_{x-y}$ formed out of the modulation and receiver matrices can be written as:

$$
\boldsymbol{H}_{x-y}^{eq} = \boldsymbol{W}_x \boldsymbol{v}_y
\tag{3}
$$

At the end, the received signal in the frequency domain R before equalization can be written as

$$
R_{x-y}(k) = H_{x-y}^{eq}(k,k)\,S(k) + \sum_{k \neq k'} H_{x-y}^{eq}\left(k,k'\right) S\left(k'\right)
\tag{4}
$$

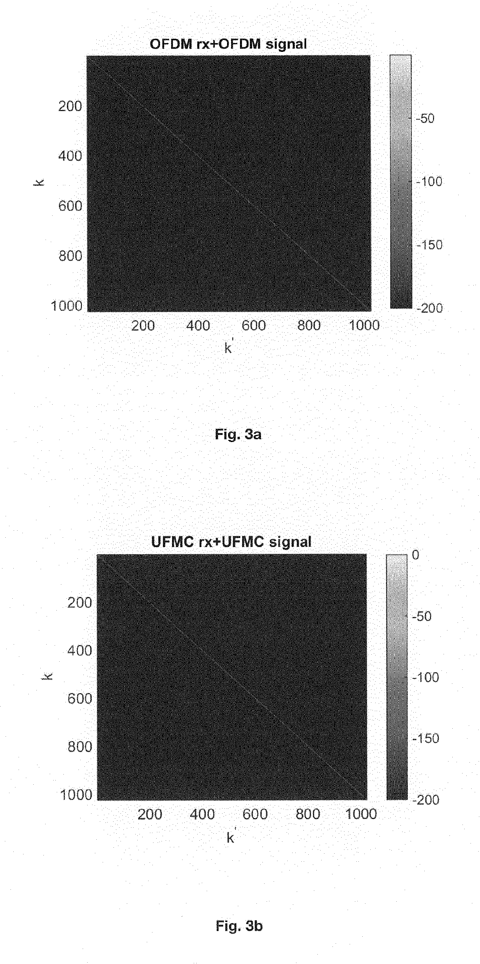

$H_{x-y}^{eq}\left(k,k'\right)$ then represents the interference of subcarrier $k'$ on subcarrier $k$. In an orthogonal scheme (UFMC signal → UFMC receiver or OFDM-signal → OFDM receiver), the equivalent channel is a diagonal matrix and hence $H_{x-y}^{eq}\left(k,k'\right) = 0 \ \forall k \neq k'$ · This is also clear from Figs. **3a and 3b,** where the respective equivalent channels of OFDM and UFMC are depicted. As we can see, the whole energy is concentrated in the main diagonal, indicating that every received subcarrier is related to the corresponding sent subcarrier with one tap fading channel coefficient.

An example notation of modulation and receiver matrices of OFDM and UFMC used in the present disclosure is listed in Table 1.1

Table 1.1: Modulation and receiver matrices of OFDM and UFMC

| Matrix | Value |
|---|---|
| $\boldsymbol{W}_{ofdm}$ | $[\boldsymbol{0}_{N \times L}\, \boldsymbol{F}_N]$ |
| $\boldsymbol{W}_{ufmc}$ | $[\boldsymbol{F}_N\, \boldsymbol{F}_{N,1:L}]$ |
| $\boldsymbol{v}_{ofdm}$ | $\begin{bmatrix} \boldsymbol{F}_{cp}^H \\ \boldsymbol{F}_N^H \end{bmatrix}$ |
| $\boldsymbol{v}_{ufmc}$ | $t_{N+L \times N}\, \boldsymbol{F}_N^H$ |
| $\boldsymbol{v}_{cp\text{-}ufmc}$ | $t_{N+L \times N+0.5L} \begin{bmatrix} \boldsymbol{F}_{cp}^H \\ \boldsymbol{F}_N^H \end{bmatrix}$ |

where $L$ denotes the OFDM CP length, $\boldsymbol{F}_{cp}$ is a matrix consisting of the last $L$ columns of the $N$ x $N$ FFT matrix $\boldsymbol{F}_N$. The UFMC filtering matrix $t_{N+L \times N}$ can be written as

$$t_{N+L \times N} = \begin{bmatrix} t(0) & \cdots & 0 & \cdots & \cdots \\ \vdots & \ddots & & \ddots & \\ t(L) & \ddots & & \ddots & 0 \\ 0 & \ddots & & \ddots & \\ & 0 & t(L) & & t(0) \\ 0 & \ddots & & \ddots & \vdots \\ & & 0 & \cdots & t(L) \end{bmatrix}. \tag{5}$$

Here, L denotes the order of the low pass filter used at the transmitter side.

In the following, we use the above example model to assess the interference of UFMC signal on OFDM receiver. We examine the structure of the equivalent channel to deduce enhancements which have proven effective in the worst case scenario as well as in realistic scenario where the two waveforms occupy separate contiguous sub-bands.

From Table 1.1 and Eq. (2) the received UFMC signal using an OFDM receiver can be written as

$$\begin{aligned} \boldsymbol{R}_{O-U} &= [\boldsymbol{0}_{N \times L} \boldsymbol{F}_N] t_{N+L \times N} \boldsymbol{F}_N^H \boldsymbol{S}_{N \times 1} \\ &= \boldsymbol{F}_N \begin{bmatrix} t(L) & \cdots & t(0) & 0 & \cdots \\ 0 & \ddots & & \ddots & \\ \vdots & 0 & t(L) & \cdots & t(0) \\ \vdots & \ddots & & \ddots & \\ 0 & \ddots & & \ddots & t(L) \end{bmatrix} \boldsymbol{F}_N^H \boldsymbol{S}_{N \times 1} \\ &= \boldsymbol{F}_N t_{O-U}^{eq} \boldsymbol{F}_N^H \boldsymbol{S}_{N \times 1} \end{aligned} \tag{6}$$

It is clear that

$$t_{O-U}^{eq} = \begin{bmatrix} t(L) & \cdots & t(0) & 0 & \cdots \\ 0 & \ddots & & \ddots & \\ \vdots & 0 & t(L) & \cdots & t(0) \\ \vdots & \ddots & & \ddots & \\ 0 & \ddots & & \ddots & t(L) \end{bmatrix} \tag{7}$$

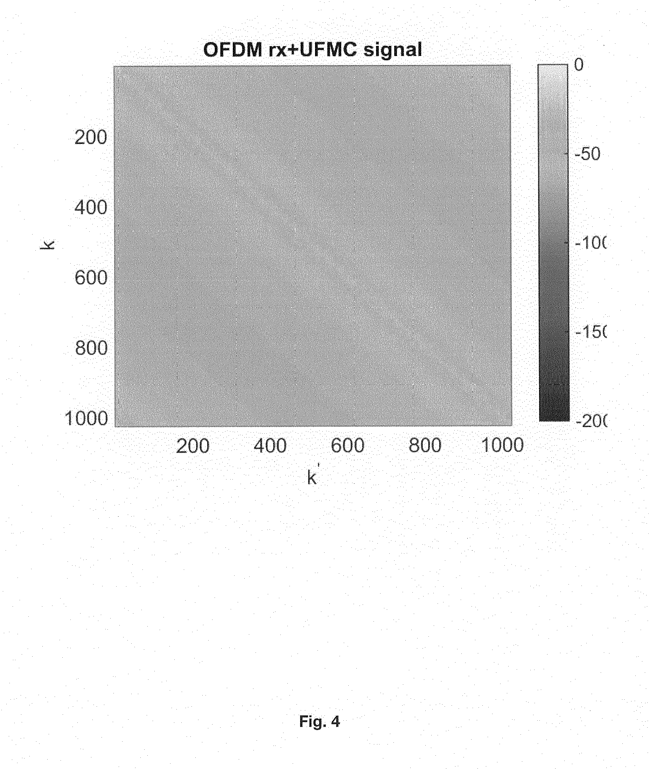

is a non-circulant matrix and hence its equivalent channel $H_{O-U}^{eq} = \boldsymbol{F}_N t_{O-U}^{eq} \boldsymbol{F}_N^H$ is not a diagonal matrix leading to ICI as shown in **Fig. 4.** In Fig. 4, we can see the equivalent channel of a heterogeneous waveform case: OFDM receiver + UFMC signal. Compared to Figs. 3a, b, we can see the loss in orthogonality via the leaked energy to the off-diagonal coefficients. We can see how the energy is concentrated in the off-diagonals around the main diagonal, which is intuitively satisfying since the closer subcarriers will leak more energy than the far subcarriers. In addition, we can observe energy concentration in the top-right and bottom-left parts of the equivalent channel matrix, owing to the circular nature of the FFT operation. This means that subcarrier 0 will have significant interference on subcarriers 1 and *N*-1. Such a matrix structure is also common in OFDM systems with ICI due to a time varying channel.

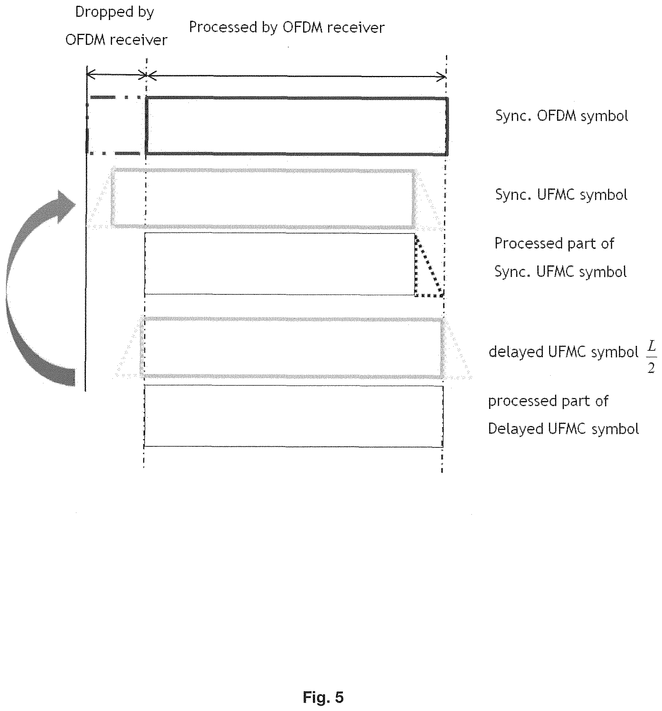

With a delayed UFMC signal of, for example, 0.5L samples (or equivalently an OFDM receiver with sampling delay -0.5L) (we assume L is even for simplicity), as shown in **Fig. 5,** the received signal can be written as

$$H_{O-U}^{eq,0.5L} \quad = \quad [\boldsymbol{0}_{N \times L}\boldsymbol{F}_N] \begin{bmatrix} \tilde{\boldsymbol{t}}_{L,0.5L+1:L \times N} \\ \tilde{\boldsymbol{t}}_{1,N \times N} \\ \tilde{\boldsymbol{t}}_{L,1:0.5L \times N} \end{bmatrix} \boldsymbol{F}_N^H$$

$$= \quad \boldsymbol{F}_N \begin{bmatrix} t(0.5L) & \dots & \dots & t(0) & & & & \\ \vdots & \ddots & & & \ddots & & & \\ \vdots & \ddots & & & & \ddots & & \\ t(L) & \dots & & & & & t(0) & \\ & \ddots & & \ddots & & & & \ddots & \\ & & \ddots & & & \ddots & \ddots & & t(0) \\ & & & \ddots & & & \ddots & & \vdots \\ & & & & \ddots & & \ddots & & \vdots \\ & & & & & t(L) & \dots & \dots & t(0.5L) \end{bmatrix} \boldsymbol{F}_N^H \qquad (8)$$

$$\boldsymbol{t}_{O-U}^{eq,0.5L} = \begin{bmatrix} t(0.5L) & \dots & \dots & t(0) & & & & \\ \vdots & \ddots & & & \ddots & & & \\ \vdots & \ddots & & & & \ddots & & \\ t(L) & \dots & & & & & t(0) & \\ & \ddots & & \ddots & & & & \ddots & \\ & & \ddots & & \ddots & \ddots & & & t(0) \\ & & & \ddots & & & \ddots & & \vdots \\ & & & & \ddots & & \ddots & & \vdots \\ & & & & & t(L) & \dots & \dots & t(0.5L) \end{bmatrix} \qquad (9)$$

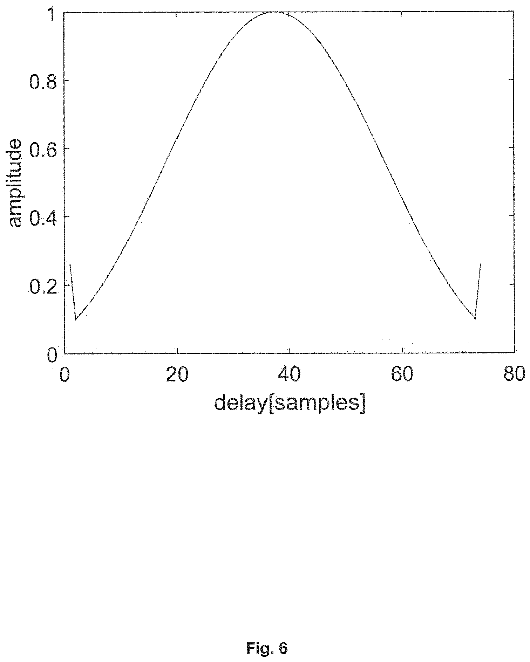

Owing to the symmetric behaviour of the UFMC low pass filter in the time domain as shown in **Fig.6,** every element in the filter $t$(0.5$L$ - $l$) can be written as

$$|t(0.5L + l)| = |t(0.5L - l)| \qquad (10)$$

The filter coefficients are frequency shifted to a non-integer sub-band subcarrier position $p = K$ +0.5$Q$ - 0.5, where $K$ is a frequency shift at the beginning of the OFDM symbol and Q is the number of subcarriers per sub-band. Therefore, each element (e.g., filter coefficient) in the baseband low pass filter is multiplied by an exponential $exp\left(\frac{j2\pi pl}{N}\right)$. Therefore, (10) can be modified to

$$t(0.5L + l) = t^*(0.5L - l)exp\left(\frac{j2\pi pL}{N}\right) \qquad (11)$$

or alternatively

$$t(L - l) = t^*(l)exp\left(\frac{j2\pi pL}{N}\right) \qquad (12)$$

$t$ possess an even amplitude symmetry around the point $L/2$ resulting in the following time domain equivalent matrix

$$t_{O-U}^{eq,0.5L}$$

$$
t_{O-U}^{eq,0.5L} =
\begin{bmatrix}
t(0.5L) & \cdots & \cdots & t(0) & & & & & \\
\vdots & \ddots & & & \ddots & & & & \\
\vdots & \ddots & & & & \ddots & & & \\
t(L) & \cdots & & & & & t(0) & & \\
& \ddots & & & \ddots & & & \ddots & \\
& & \ddots & & & \ddots & \ddots & & t(0) \\
& & & \ddots & & & \ddots & & \vdots \\
& & & & \ddots & & \ddots & & \vdots \\
& & & & & t(L) & \cdots & \cdots & t(0.5L)
\end{bmatrix}
\tag{13}
$$

$$
=
\begin{bmatrix}
t(0.5L) & \cdots & \cdots & t(0) & & & & & \\
\vdots & \ddots & & & \ddots & & & & \\
\vdots & \ddots & & & & \ddots & & & \\
e^{(j\gamma)}t^*(0) & \cdots & & & & & t(0) & & \\
& \ddots & & & \ddots & & & \ddots & \\
& & \ddots & & & \ddots & \ddots & & t(0) \\
& & & \ddots & & & \ddots & & \vdots \\
& & & & \ddots & & \ddots & & \vdots \\
& & & & & e^{(j\gamma)}t^*(0) & \cdots & \cdots & t(0.5L)
\end{bmatrix}
\tag{14}
$$

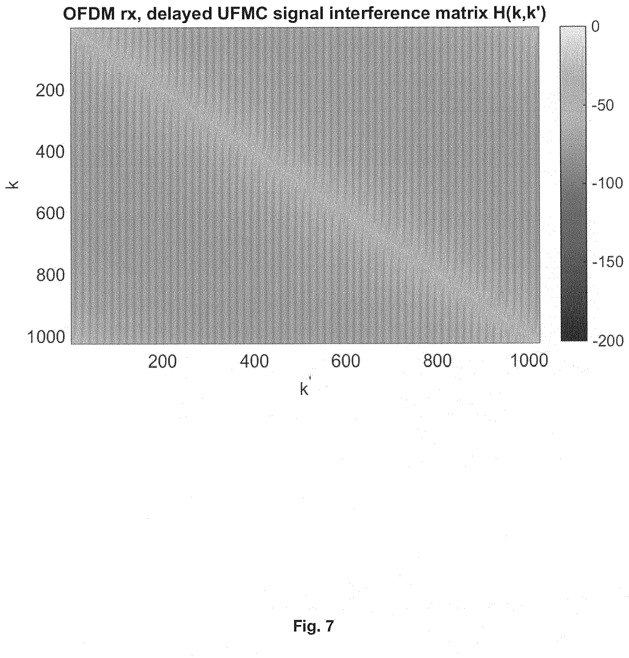

where $\gamma = 2\pi pL/N$. The equivalent channel $H_{O-U}^{eq,0.5L} = F_N\, t_{O-U}^{eq,0.5L}\, F_N^H$ possess much lower power in the off-diagonal coefficients compared to the non-delayed version in (7), as we can see from comparing **Fig.7** to Fig. 4, where we can see the reduction in the energy leaked to the off-diagonal coefficients.

As shown in Fig. 5, delaying the UFMC signal relative to the OFDM signal produces a useful signal part which is closer to the structure of the OFDM signal. One can also observe that windowing the received OFDM signal at an UFMC receiver, produces an OFDM signal more similar in structure to the UFMC signal. In both cases, interference was supressed when the interfering heterogeneous waveform was modified to be more 'alike' to the signal type of the given receiver. The equivalent time domain channels $t_{O-U}^{eq,0.5L}$ and $t_{O-U}^{eq}$ can be written as

$$
t_{O-U}^{eq,0.5L} = t^{c,0.5L} - t^{int,0.5L}
\tag{15}
$$

$$
t_{O-U}^{eq} = t^c - t^{int}
\tag{16}
$$

where $t^c$ and $t^{c,0.5L}$ are circulant matrices (and therefore do not contribute to the ICI). The complementary matrices $t^{int,0.5L}$ and $t^{int}$ can be written as

$$t^{int,0.5L} = \begin{bmatrix} & \cdots & & t(L) & \cdots & t(0.5L+1) \\ & \vdots & \ddots & & \ddots & \vdots \\ & \cdots & \cdots & & & t(L) \\ \mathbf{0}_{N\times 1} & \cdots & & & \cdots & \mathbf{0}_{N\times 1} \\ t(0) & \cdots & & & & \\ \vdots & \ddots & & & & \\ t(0.5L-1) & \cdots & t(0) & & & \end{bmatrix}_{N\times N} \quad (17)$$

$$t^{int} = \begin{bmatrix} \mathbf{0}_{N\times 1} & \cdots & & \cdots & \mathbf{0}_{N\times 1} \\ t(0) & & & & \\ \vdots & \ddots & & & \\ \vdots & & \ddots & & \\ t(L-1) & \cdots & \cdots & t(0) & \end{bmatrix}_{N\times N} \quad (18)$$

One can observe that $t_{O-U}^{eq,0.5L}$ is the densest $N \times N$ sub-matrix out of the tall $N + L \times N$ matrix $t_{N+L\times N}$. Therefore, its complementary matrix required to fulfil circularity has fewer energy than the complementary matrix required to fulfil the circularity of $t_{O-U}^{eq}$. The ICI power can be computed using the complementary matrices $t^{int,0.5L}$ and $t^{int}$ respectively as

$$P_{ici} = (N-1) \sum_{r=0}^{L-1} \sum_{c=L-r}^{L} |t(c)|^2 \quad (19)$$

$$\begin{aligned} P_{ici,0.5L} \; &\stackrel{(B.2)}{=} \; (N-1)\, tr\left\{ tt^H \right\} \\ &= \; (N-1)\, tr\left\{ (t_1 + t_2)(t_1 + t_2)^H \right\} \end{aligned} \quad (20)$$

where $t_1$ and $t_2$ are the lower and upper triangular Toeplitz matrices *of t*, respectively. Due to symmetry reasons, we can show that

$$\begin{aligned} P_{ici,0.5L} \; &= \; (N-1)\, tr\left\{ (t_1 t_1^H + t_2 t_2^H) \right\} \\ &= \; (N-1)\left( \sum_{r=0}^{0.5L-1} \sum_{c=L-r}^{L} |t(c)|^2 + \sum_{r=0}^{0.5L-1} \sum_{c=L-r}^{L} |t(L-c)|^2 \right) \\ &\stackrel{(2.8)}{=} \; 2(N-1)\left( \sum_{r=0}^{0.5L-1} \sum_{c=L-r}^{L} |t(c)|^2 \right) \end{aligned} \quad (21)$$

Equation (19) can be written as

$$P_{ici} = (N-1)\left(\sum_{r=0}^{0.5L-1}\sum_{c=L-r}^{L}|t(c)|^2 + \underbrace{\sum_{r=0.5L}^{L-1}\sum_{c=L-r}^{L}|t(c)|^2}_{\frac{1}{N-1}P_{ici,sub}}\right)$$

$$= 0.5P_{ici,0.5L} + P_{ici,sub} \tag{22}$$

$$P_{ici,sub} = (N-1)\sum_{r=0.5L}^{L-1}\sum_{c=L-r}^{L}|t(c)|^2$$

$$= (N-1)\sum_{r=0}^{0.5L-1}\sum_{c=L-r-0.5L}^{L}|t(c)|^2$$

$$= (N-1)\sum_{r=0}^{0.5L-1}\sum_{c=L-r-0.5L}^{L-r-1}|t(c)|^2 + (N-1)\sum_{r=0}^{0.5L-1}\sum_{c=L-r}^{L}|t(c)|^2$$

$$= (N-1)\sum_{r=0}^{0.5L-1}\sum_{c=0.5L-r}^{L-r-1}|t(c)|^2 + 0.5P_{ici,0.5L} \tag{23}$$

Equation (22) can then be written as

$$P_{ici} \stackrel{(A.9),(A.10)}{=} P_{ici,0.5L} + (N-1)\underbrace{\sum_{r=0}^{0.5L-1}\sum_{c=0.5L-r}^{L-r-1}|t(c)|^2}_{P_{ici,ext}} \tag{24}$$

It can be shown that $P_{ici,ext} > 0.5P_{ici,0.5L}$ if $|t(L)| < |t(0.5L+1)|$. Therefore the following lower bound for the interference reduction brought by delaying the UFMC signal can be obtained

$$P_{ici} > 1.5P_{ici,0.5L} \tag{25}$$

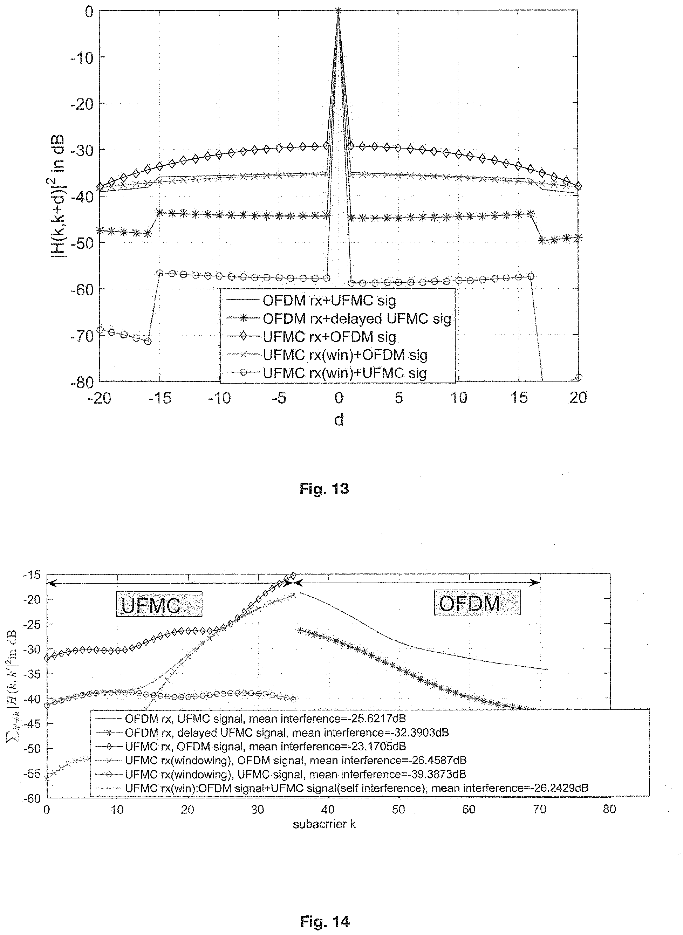

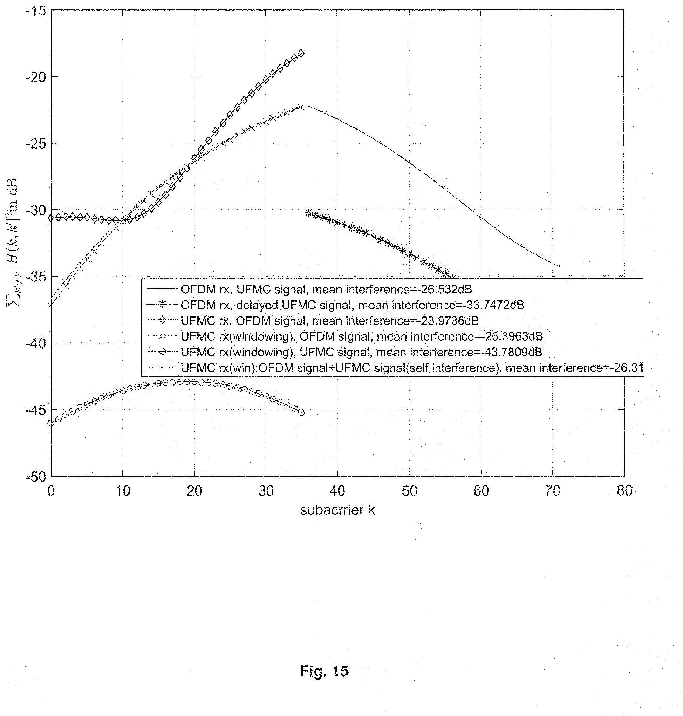

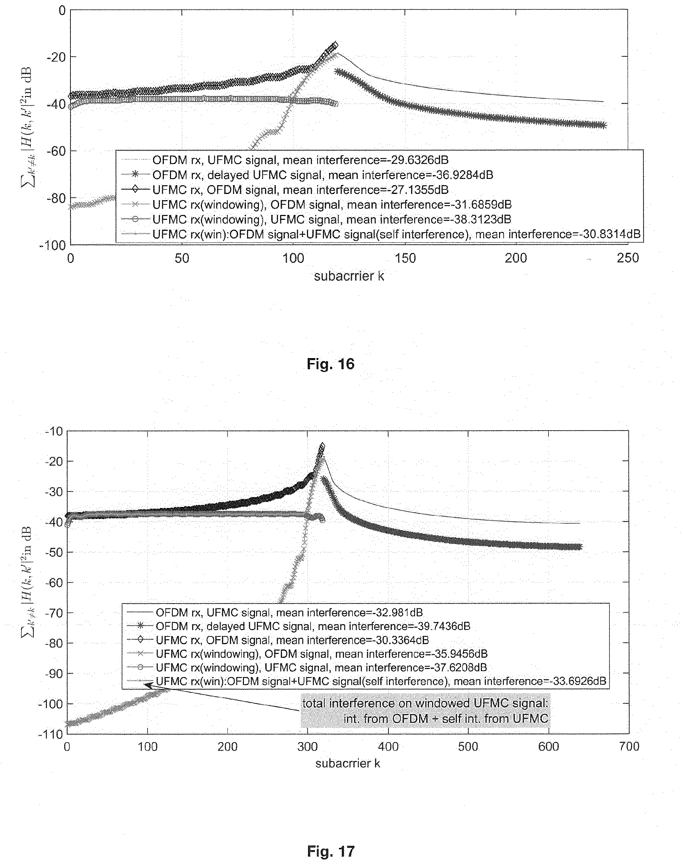

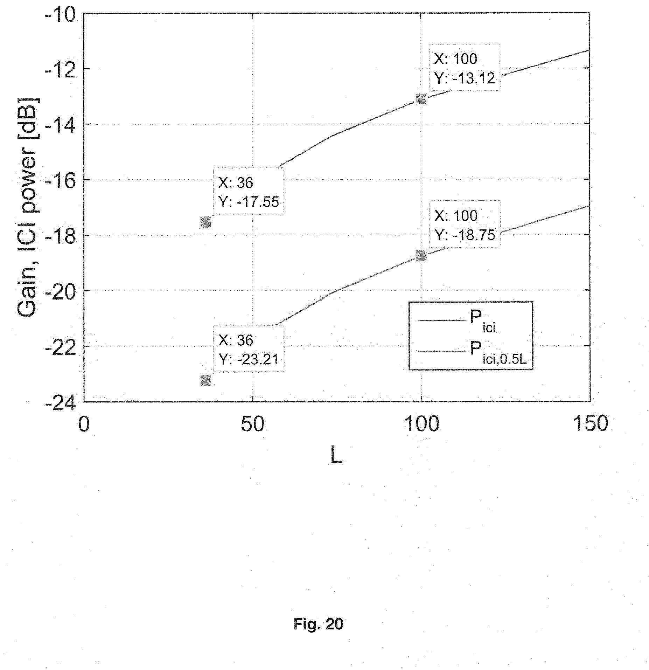

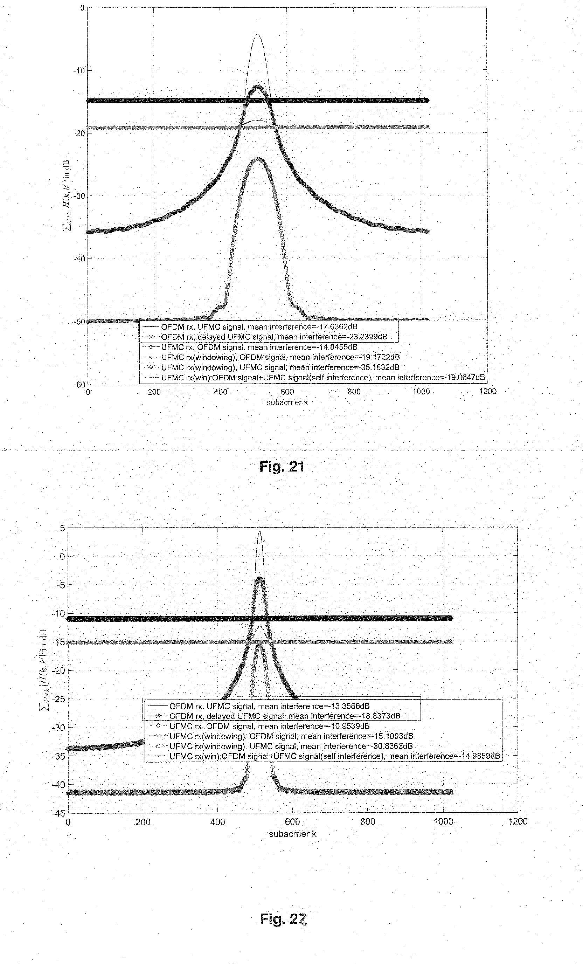

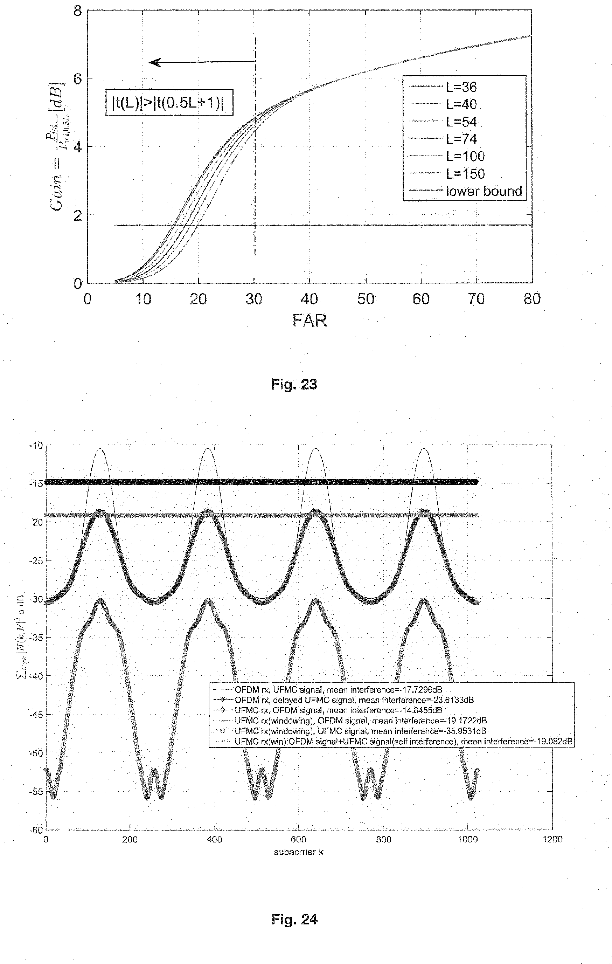

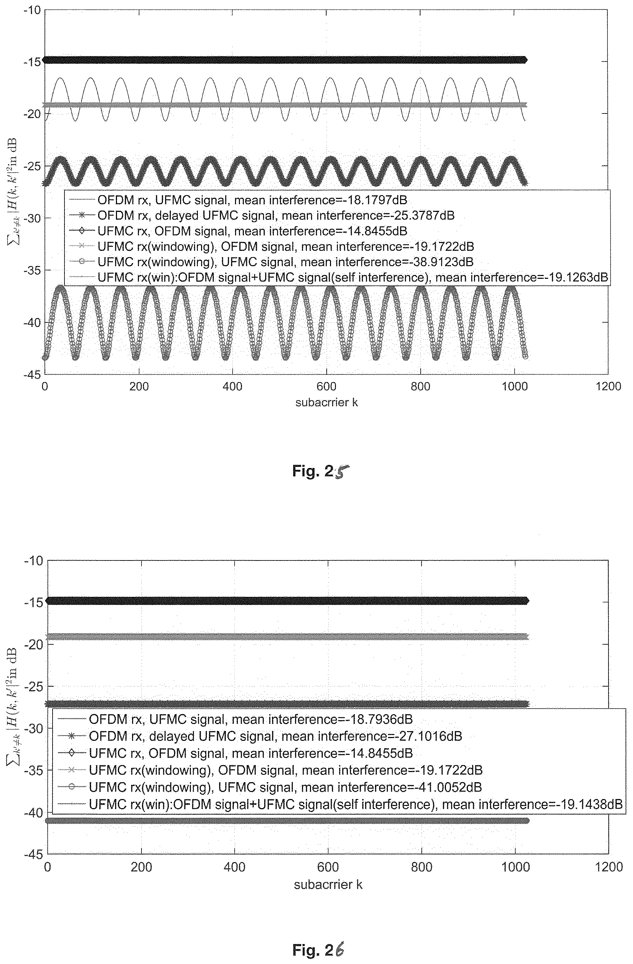

Therefore we expect at least a gain of $10*\log10(1.5) = 1.7$dB if $< |t(L)| < |t(0.5L+1)|$. In Fig. 20, the upper bound on the mean ICI power per subcarrier is plotted using (19) and (21) for different filter lengths. As we can see, as L increases the mean ICI power increases, which is intuitively satisfying. The result in Fig. 20 is consistent with the results computed in **Figs. 21 and 22** with the whole date allocated in one PRB and full bandwidth excitation, as observed from comparing the obtained numbers. The results in Figures 20 to 22 represent an upper bound on the mean ICI power since it assumes the worst case scenario where every subcarrier k receives interference from the rest of the N subcarriers carrying a different waveform. When both waveforms are allocated in separate bands, expect ICI to decrease significantly, as shown in Figures 14 to 19. In further investigations, the ICI can be modelled in this case with non-contiguous frequency allocation. In **Fig. 23,** we can see the variation of the gain obtained from the relative delay of UFMC signal as a function of L and the filter attenuation ratio (FAR). As we can see, as the FAR decreases the gain decreases since $\frac{|t(L)|}{|t(0.5L+1)|}$ increases as explained earlier. For FAR< 30dB, the ratio $\frac{|t(L)|}{|t(0.5L+1)|} > 1$, however the obtained gain is higher than the lower bound computed earlier, 1.7dB, which indicates this bound can be further relaxed. As shown, the gain is always positive for a wide range of FAR, between 5dB and 80dB. As the number of PRBs increases in full band excitation, the upper bound on the mean ICI power decreases slightly as can be seen from comparing Fig. 21 with **Figs. 24 to 26.** In addition, as the number of PRBs increases (or alternatively the number of subcarriers per PRB decreases) variations of the ICI power across the different subcarriers decreases, as clear from comparing Fig. 21 with Fig. 26.

The equivalent channel of a delayed UFMC signal and a CP-OFDM receiver matrix is naturally identical to the equivalent channel of a UFMC signal and an advanced CP-OFDM receiver matrix. Assuming the transmitted UFMC signal includes a CP, where 0.5L samples are of a multicarrier symbol are assigned to the CP and 0.5L samples are assigned to the UFMC filter part, the equivalent channel of a delayed UFMC signal with CP + OFDM receiver matrix can be written as

$$
\begin{aligned}
\boldsymbol{H}_{O-cU}^{eq,0.5L} &= \begin{bmatrix} \boldsymbol{0}_{N\times 0.5L} & \boldsymbol{F}_N & \boldsymbol{0}_{N\times 0.5L} \end{bmatrix} \boldsymbol{t}_{N+L\times N+0.5L} \begin{bmatrix} \boldsymbol{F}_{cp}^H \\ \boldsymbol{F}_N^H \end{bmatrix} \\
&= \boldsymbol{F}_N \begin{bmatrix} t(0.5L) & \dots & t(0) & 0 & \dots \\ 0 & \ddots & & \ddots & \\ \vdots & 0 & t(0.5L) & \dots & t(0) \end{bmatrix}_{N\times N+0.5L} \begin{bmatrix} \boldsymbol{F}_{cp}^H \\ \boldsymbol{F}_N^H \end{bmatrix}
\end{aligned}
\tag{26}
$$

Observing that the equivalent channel of an CP-OFDM signal + CP-OFDM receiver matrix in the presence of a multi-path channel $\boldsymbol{g}_{N\times N+L}$ can be written as

$$
\begin{aligned}
\boldsymbol{H}_{OFDM}^{eq} &= \boldsymbol{F}_N \boldsymbol{g}_{N\times N+L} \begin{bmatrix} \boldsymbol{F}_{cp}^H \\ \boldsymbol{F}_N^H \end{bmatrix} \\
&= \boldsymbol{F}_N \begin{bmatrix} h(L_c) & \dots & h(0) & 0 & \dots \\ 0 & \ddots & & \ddots & \\ \vdots & \dots & h(L_c) & \dots & h(0) \end{bmatrix} \begin{bmatrix} \boldsymbol{F}_{cp}^H \\ \boldsymbol{F}_N^H \end{bmatrix}
\end{aligned}
\tag{27}
$$

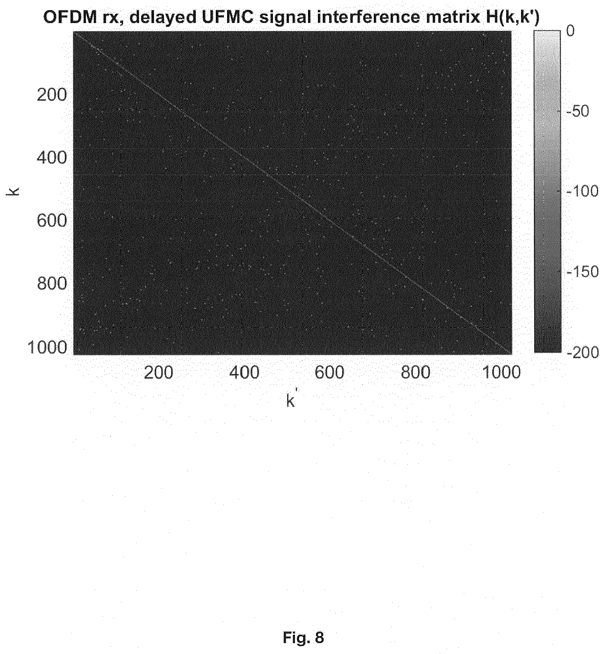

Therefore, we can conclude that delaying the UFMC signal with CP by 0.5L samples, completely nulls the interference of the CP-UFMC signal on the CP-OFDM signal in a flat fading channel, as can be seen in **Fig. 8.**

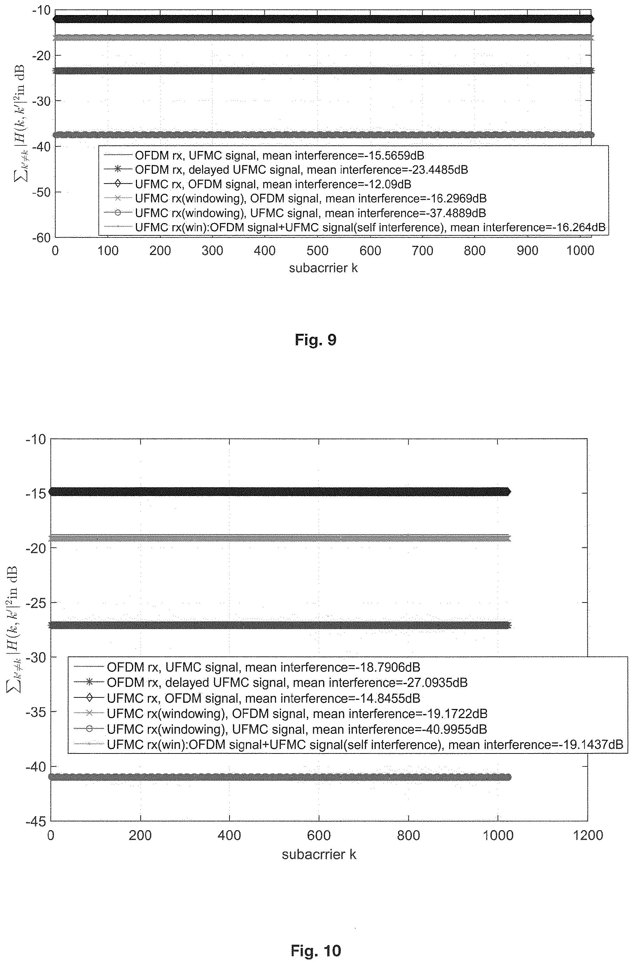

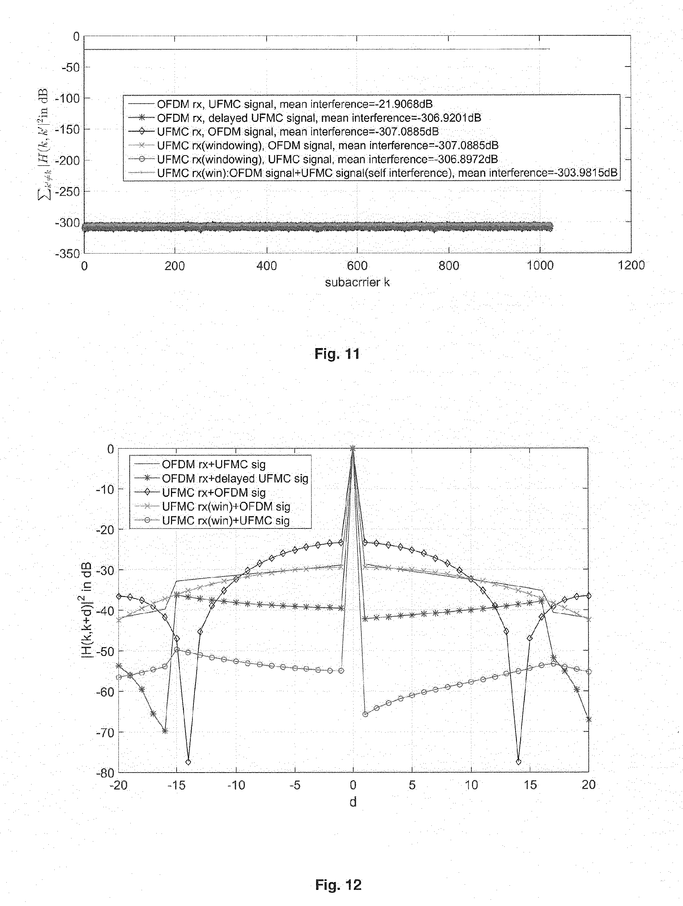

In **Fig. 9,** the total interference per subcarrier is shown for different signal structures and receiver settings. In **Fig. 11,** we can see the total interference per subcarrier using CP-UFMC with raised cosine windowing. We can see that CP-UFMC receiver is orthogonal to an OFDM signal, while a CP-UFMC signal imposes no interference on CP-OFDM receiver when delayed with 0.5L samples. These plots are pessimistic, since they assume the whole band (except for the subcarrier of interest) is occupied with the interfering waveform or alternatively one waveform is being processed with the receiver of the other waveform.

In **Fig. 12,** we plot the interference power on the subcarrier at position 0.5N from its neighbouring subcarriers, as a function of the off-diagonal distance to that subcarrier. As expected, the interference power decreases as the off-diagonal distance increases, i.e., closer subcarriers impose more interference power compared to further subcarriers. In **Figs 13 and 10,** we plot the total interference power and the interference power vs off-diagonal distance, respectively, using L = 36. As can be observed, in comparison to Figs. 9 and 12, using a smaller filter order, lower interference power is observed, at the expense of lower immunity against channels with delay spread.

In **Figs. 14 to 17,** we show the total interference per subcarrier for the case when the two waveforms occupy different sub-bands. The simulation settings are summarized in the following table:

| Setting | Value |
| --- | --- |
| channel | flat fading, no noise, $h = 1$ ($L_c = 0$) |
| FFT size | 1024 |
| no of PRBs/waveform | 3,10,20 |
| UFMC | PRBS 1:3,1:10,1:20 |
| OFDM | PRBS 4:6,11.20,21:40 |
| no of SCs per PRB | 12 |
| filter parameters | $L = 36$, 73 and 40dB attenuation |
| Pre-equalization | on |

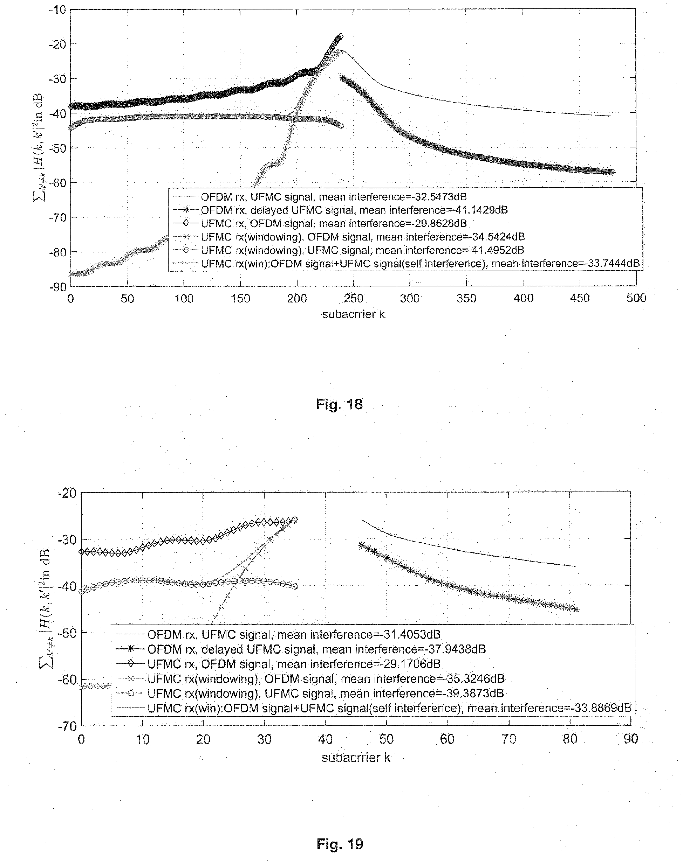

We can see that the interference power is maximum at the interference border between the two waveforms, which is intuitively satisfying. Therefore, as expected, as the no. of PRBs increases from 3 to 20, the mean interference power decreases since the percentage of subcarriers which suffer significant distortion decreases. In **Fig. 19,** a guard band of 10 subcarriers was applied between the two waveforms. As expected, this lowered the interference of UFMC signal on OFDM receiver and vice versa. The gain in interference reduction using 10 subcarriers as a guard band was 5.5 dB.

The outcome of the present disclosure can be summarized in the following points:

Assuming two users using the two different waveforms on neighbouring sub-bands, an assignment of 20 PRBs per user, an average SIR > 30dB can be reached, with no special enhancements or guard band usage. Thus, allowing for transmission at high order QAM constellations (e.g. 64QAM).

Delaying the UFMC signal preferably by 0.5L samples relative to the OFDM signal, can reduce the interference on an OFDM receiver from a UFMC signal significantly. CP-UFMC receiver is orthogonal to a CP-OFDM signal, depending on the uncorrupted part of the CP. Similarly, a delayed CP-UFMC signal preferably by $0.5L$ samples poses no ICI on a CP-OFDM receiver.

Although the present study was done using single IFFT at transmitter side and single FFT at the receiver side we expect the same conclusions to hold with the addition of an $N$ based DFT and IDFT spread at transmitter and receiver side respectively.

To summarize, it is proposed to reduce the interference between OFDM and UFMC without sacrificing spectral efficiency and with no additional significant cost. It is suggested to transmit the UFMC signal with a relative delay compared to the OFDM signal. Our study reveals that a sampling delay of L/2 samples, where Lis the UFMC filter order and the length of the OFDM cyclic prefix, may be optimum for suppressing the ICI power at OFDM receiver. At the UFMC receiver side, with proper synchronization introducing relative delay at the transmitter side shouldn't influence the quality of the demodulated UFMC signal, since the UFMC receiver will align itself to the delayed signal. However, at a neighboring sub-band using OFDM waveform, which is not orthogonal to the UFMC waveform and hence suffers from interference, the relative delay of the UFMC signal results in significantly less ICI power at OFDM receiver side. The relative delay of the UFMC signal at the OFDM receiver, results in an equivalent channel with better circular properties in the time domain and hence lower ICI power leakage in the frequency domain. In addition, the relative delay of the OFDM signal at the UFMC receiver has no effect on the induced ICI power leakage of the OFDM signal at the UFMC receiver.

Functional blocks shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

**1.** Method for reducing interference between a Cyclic Prefix Orthogonal Frequency-Division Multiplexing, OFDM, signal and a Universal Filtered Multi-Carrier, UFMC, signal, the UFMC signal comprising a first frequency sub-band and at least a second frequency sub-band,

the first frequency sub-band comprising a first group of subcarriers, the first frequency sub-band being filtered with a first frequency sub-band specific sideband suppression filter (106-1) for sideband suppression outside of said first frequency sub-band,
the second frequency sub-band comprising a second group of subcarriers, the second frequency sub-band being filtered with a second frequency sub-band specific side-band suppression filter (106-1) for sideband suppression outside of said second frequency sub-band,
the method comprising:
transmitting the OFDM signal and the UFMC signal with a relative delay to each other.

2. The method of claim 1, wherein the relative delay is a fixed relative delay.

3. The method of claim 1, wherein the OFDM signal uses a cyclic prefix and wherein transmitting the OFDM signal and the UFMC signal with the relative delay causes a relative delay between a transmitted symbol of the UFMC signal and a transmitted symbol of the OFDM signal smaller than a duration of the cyclic prefix.

4. The method of claim 3, wherein the relative delay between the transmitted symbol of the UFMC signal and the transmitted symbol of the OFDM signal corresponds to 0.4 to 0.6 of the duration of the cyclic prefix.

5. The method of claim 3, wherein a filter length of the first and/or the second frequency sub-band specific sideband suppression filter corresponds to the duration of the cyclic prefix.

6. The method of claim 1, wherein the OFDM signal uses one or more frequency sub-bands spectrally adjacent to the first and/or the second frequency sub-band of the UFMC signal.

7. The method of claim 1, further comprising:

   generating OFDM symbols of the OFDM signal with a OFDM symbol rate;
   and
   generating multicarrier symbols of the UFMC signal with a multicarrier symbol rate equal to the OFDM symbol rate.

8. The method of claim 1, further comprising:

   converting a frequency domain version of the OFDM signal to a time domain version using an inverse discrete Fourier transform of a predefined length, the pre-defined length corresponding to a maximum number of subcarriers of the OFDM signal; and
   converting a frequency domain version of the UFMC signal to a time domain version using an inverse discrete Fourier transform of the predefined length.

9. The method of claim 1, wherein the transmitting comprises transmitting the OFDM signal using a first Radio Frequency, RF, carrier signal and transmitting the UFMC signal using a second RF carrier signal.

10. Apparatus (100) for reducing interference between a Cyclic Prefix Orthogonal Frequency-Division Multiplexing, OFDM, signal and a Universal Filtered Multi-Carrier, UFMC, signal,
the UFMC signal comprising a first frequency sub-band and at least a second frequency sub-band,
the first frequency sub-band comprising a first group of subcarriers, the first frequency sub-band being filtered with a first frequency sub-band specific sideband suppression filter (106-1) for sideband suppression outside of said first frequency sub-band,
the second frequency sub-band comprising a second group of subcarriers, the second frequency sub-band being filtered with a second frequency sub-band specific side-band suppression filter (106-2) for sideband suppression outside of said second frequency sub-band,
the apparatus (100) comprising:
a transmitter configured to transmit the OFDM signal and the UFMC signal with a relative delay to each other.

**Patentansprüche**

1. Verfahren zum Reduzieren von Interferenzen zwischen einem zyklischen Präfix OFDM-Signal ("Orthogonal Frequency-Division Multiplexing") und einem UFMC-Signal ("Universal Filtered Multi-Carrier"), wobei das UFMC-Signal ein erstes Frequenzteilband und mindestens ein zweites Frequenzteilband umfasst,

wobei das erste Frequenzteilband eine erste Gruppe von Subträgern umfasst, wobei das erste Frequenzteilband mit einem ersten Frequenzteilband-spezifischen Seitenbandunterdrückungsfilter (106-1) zur Seitenbandunterdrückung außerhalb des ersten Frequenzteilbandes gefiltert wird,
wobei das zweite Frequenzteilband eine zweite Gruppe von Subträgern umfasst, wobei das zweite Frequenzteilband mit einem zweiten Frequenzteilband-spezifischen Seitenbandunterdrückungsfilter (106-1) zur Seitenbandunterdrückung außerhalb des zweiten Frequenzteilbandes gefiltert wird,
wobei das Verfahren umfasst:
Übertragen des OFDM-Signals und des UFMC-Signals mit einer relativen Verzögerung zueinander.

2. Verfahren nach Anspruch 1, wobei die relative Verzögerung eine feste relative Verzögerung ist.

3. Verfahren nach Anspruch 1, wobei das OFDM-Signal ein zyklisches Präfix verwendet und wobei das Übertragen des OFDM-Signals und des UFMC-Signals mit der relativen Verzögerung eine relative Verzögerung zwischen einem übertragenen Symbol des UFMC-Signals und einem übertragenen Symbol des OFDM-Signals verursacht, die kleiner ist als eine Dauer des zyklischen Präfix.

4. Verfahren nach Anspruch 3, wobei die relative Verzögerung zwischen dem übertragenen Symbol des UFMC-Signals und dem übertragenen Symbol des OFDM-Signals 0,4 bis 0,6 der Dauer des zyklischen Präfixes entspricht.

5. Verfahren nach Anspruch 3, wobei eine Filterlänge des ersten und/oder des zweiten Frequenzteilband-spezifischen Seitenbandunterdrückungsfilters der Dauer des zyklischen Präfixes entspricht.

6. Verfahren nach Anspruch 1, wobei das OFDM-Signal ein oder mehrere Frequenzteilbänder verwendet, die spektral an das erste und/oder zweite Frequenzteilband des UFMC-Signals angrenzen.

7. Verfahren nach Anspruch 1, ferner umfassend:

Erzeugen von OFDM-Symbolen des OFDM-Signals mit einer OFDM-Symbolrate; und
Erzeugen von Mehrträgersymbolen des UFMC-Signals mit einer Mehrträgersymbolrate, die gleich der OFDM-Symbolrate ist.

8. Verfahren nach Anspruch 1, ferner umfassend:

Umwandeln einer Frequenzbereichsversion des OFDM-Signals in eine Zeitbereichsversion unter Verwendung einer inversen diskreten Fourier-Transformation mit einer vordefinierten Länge, wobei die vordefinierte Länge einer maximalen Anzahl von Subträgern des OFDM-Signals entspricht; und
Umwandeln einer Frequenzbereichsversion des UFMC-Signals in eine Zeitbereichsversion unter Verwendung einer inversen diskreten Fourier-Transformation der vordefinierten Länge.

9. Verfahren nach Anspruch 1, wobei das Übertragen das Übertragen des OFDM-Signals unter Verwendung eines ersten Hochfrequenz-HF-Trägersignals und das Übertragen des UFMC-Signals unter Verwendung eines zweiten HF-Trägersignals umfasst.

10. Vorrichtung (100) zum Reduzieren von Interferenzen zwischen einem zyklischen Präfix OFDM-Signal ("Orthogonal Frequency-Division Multiplexing") und einem UFMC-Signal ("Universal Filtered Multi-Carrier"),
wobei das UFMC-Signal ein erstes Frequenzteilband und mindestens ein zweites Frequenzteilband umfasst,
wobei das erste Frequenzteilband eine erste Gruppe von Subträgern umfasst, wobei das erste Frequenzteilband mit einem ersten Frequenzteilband-spezifischen Seitenbandunterdrückungsfilter (106-1) zur Seitenbandunterdrückung außerhalb des ersten Frequenzteilbandes gefiltert wird,
wobei das zweite Frequenzteilband eine zweite Gruppe von Subträgern umfasst, wobei das zweite Frequenzteilband mit einem zweiten Frequenzteilband-spezifischen Seitenbandunterdrückungsfilter (106-2) zur Seitenbandunterdrückung außerhalb des zweiten Frequenzteilbandes gefiltert wird,
wobei die Vorrichtung (100) umfasst:
einen Sender, der zum Übertragen des OFDM-Signals und des UFMC-Signals mit einer relativen Verzögerung zueinander ausgelegt ist.

**Revendications**

1. Procédé pour réduire le brouillage entre un signal de Multiplexage par Répartition Orthogonale de Fréquence, OFDM, à préfixe cyclique, et un signal Multiporteuse Universel Filtré, UFMC, le signal UFMC comprenant une première sous-bande de fréquences et au moins une seconde sous-bande de fréquences,
la première sous-bande de fréquences comprenant un premier groupe de sous-porteuses, la première sous-bande de fréquences étant filtrée avec un filtre de suppression de bande latérale spécifique de la première sous-bande de fréquences (106-1) pour la suppression de bande latérale en dehors de ladite première sous-bande de fréquences,
la seconde sous-bande de fréquences comprenant un second groupe de sous-porteuses, la seconde sous-bande de fréquences étant filtrée avec un filtre de suppression de bande latérale (106-1) spécifique de la seconde sous-bande de fréquences pour la suppression de bande latérale en dehors de ladite seconde sous-bande de fréquences,
le procédé comprenant :
l'émission du signal OFDM et du signal UFMC avec un retard relatif l'un par rapport à l'autre.

2. Procédé selon la revendication 1, dans lequel le retard relatif est un retard relatif fixe.

3. Procédé selon la revendication 1, dans lequel le signal OFDM utilise un préfixe cyclique et dans lequel l'émission du signal OFDM et du signal UFMC avec le retard relatif provoque un retard relatif entre un symbole émis du signal UFMC et un symbole émis du signal OFDM qui est inférieur à une durée du préfixe cyclique.

4. Procédé selon la revendication 3, dans lequel le retard relatif entre le symbole émis du signal UFMC et le symbole émis du signal OFDM correspond à 0,4 à 0,6 fois la durée du préfixe cyclique.

5. Procédé selon la revendication 3, dans lequel une longueur de filtre du filtre de suppression de bande latérale spécifique de la première et/ou seconde sous-bande de fréquences correspond à la durée du préfixe cyclique.

6. Procédé selon la revendication 1, dans lequel le signal OFDM utilise une ou plusieurs sous-bandes de fréquences spectralement adjacentes à la première et/ou la seconde sous-bande de fréquences du signal UFMC.

7. Procédé selon la revendication 1, comprenant en outre :

   la génération de symboles OFDM du signal OFDM avec un débit de symboles OFDM ; et
   la génération de symboles multiporteuses du signal UFMC avec un débit de symboles multiporteuses égal au débit de symboles OFDM.

8. Procédé selon la revendication 1, comprenant en outre :

   la conversion d'une version du signal OFDM dans le domaine fréquentiel en une version dans le domaine temporel en utilisant une transformée de Fourier discrète inverse ayant une longueur prédéfinie, la longueur prédéfinie correspondant à un nombre maximum de sous-porteuses du signal OFDM ; et
   la conversion d'une version du signal UFMC dans le domaine fréquentiel en une version dans le domaine temporel en utilisant une transformée de Fourier discrète inverse ayant la longueur prédéfinie.

9. Procédé selon la revendication 1, dans lequel l'émission comprend l'émission du signal OFDM en utilisant un premier signal de porteuse radiofréquence, RF, et l'émission du signal UFMC en utilisant un second signal de porteuse RF.

10. Appareil (100) destiné à réduire le brouillage entre un signal de Multiplexage par Répartition de Fréquence Orthogonale, OFDM, à préfixe cyclique et un signal Multiporteuse Universel Filtré, UFMC, le signal UFMC comprenant une première sous-bande de fréquences et
au moins une seconde sous-bande de fréquences,
la première sous-bande de fréquences comprenant un premier groupe de sous-porteuses,
la première sous-bande de fréquences étant filtrée avec un filtre de suppression de bande latérale spécifique de la première sous-bande de fréquences (106-1) pour la suppression de bande latérale en dehors de ladite première sous-bande de fréquences,
la seconde sous-bande de fréquences comprenant un second groupe de sous-porteuses, la seconde sous-bande de fréquences étant filtrée avec un filtre de suppression de bande latérale spécifique de la seconde sous-bande de fréquences (106-2) pour la suppression de bande latérale en dehors de ladite seconde sous-bande de fréquences,
l'appareil (100) comprenant :

un émetteur configuré pour émettre le signal OFDM et le signal UFMC avec un retard relatif l'un par rapport à l'autre.

Bank of Filters ( p )

$d_{1,1}$
$d_{1,2}$
$\vdots$
$d_{1,n}$

102-1

$T_{s1}=1/\Delta f$

104-1

side-lobe suppression 1
(band pass filter)
106-1

108-1

$d_{2,1}$
$d_{2,2}$
$\vdots$
$d_{2,n}$

102-2

$T_{s2}=1/\Delta f$

104-2

side-lobe suppression 2
(band pass filter)
106-2

108-2

$d_{p,1}$
$d_{p,2}$
$\vdots$
$d_{p,n}$

102-p

$T_{sm}=1/\Delta f$

104-p

side-lobe suppression p
(band pass filter)
106-p

108-p

100

109

110

$Z^{-k}$

112

Fig. 1 a

CP - OFDM ← relative delay → UFMC

Fig. 16

Fig. 1c

Fig. 2

**OFDM rx+OFDM signal**

Fig. 3a

**UFMC rx+UFMC signal**

Fig. 3b

Fig. 4

Dropped by
OFDM receiver

Processed by OFDM receiver

Sync. OFDM symbol

Sync. UFMC symbol

Processed part of
Sync. UFMC symbol

delayed UFMC symbol $\frac{L}{2}$

processed part of
Delayed UFMC symbol

Fig. 5

**Fig. 6**

Fig. 7

Fig. 8

**Fig. 9**

**Fig. 10**

**Fig. 11**

**Fig. 12**

**Fig. 13**

**Fig. 14**

Fig. 15

Fig. 16

Fig. 17

Fig. 18

Fig. 19

Fig. 20

**Fig. 21**

**Fig. 22**

**Fig. 23**

**Fig. 24**

Fig. 25

Fig. 26

**Fig. 27**

**Fig. 28**

Fig. 29

Fig. 30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHAICH FRANK et al.** Relaxed synchronization support of universal filtered multi-carrier including autonomous timing advance. *11th international symposium on wireless communications systems,* 2014

- **WUNDER GERHARD et al.** 5GNOW: non-orthogonal, asynchronous waveforms for future mobile applications. *IEEE communications magazine,* 2014, vol. 52 (2
- **SCHAICH FRANK et al.** Waveform contenders for 5G - Suitability for short packet and low latency transmissions. *IEEE 79th vehicular technology conference,* 2014